(19) Europäisches Patentamt
European Patent Office
Office européen des brevets

(11) **EP 4 333 520 B1**

(12) **EUROPEAN PATENT SPECIFICATION**

(45) Date of publication and mention
of the grant of the patent:
**20.08.2025 Bulletin 2025/34**

(51) International Patent Classification (IPC):
*H04W 72/00* (2023.01)     *H04L 1/1829* (2023.01)
*H04L 1/1867* (2023.01)

(21) Application number: **21938515.0**

(22) Date of filing: **30.04.2021**

(52) Cooperative Patent Classification (CPC):
**H04L 5/0051; H04L 1/1861; H04L 1/1864;**
**H04L 1/1887; H04L 5/0092; H04W 72/00;**
H04L 5/0035

(86) International application number:
**PCT/CN2021/091621**

(87) International publication number:
**WO 2022/227041 (03.11.2022 Gazette 2022/44)**

(54) **UPLINK TRANSMISSION METHODS, TERMINAL DEVICES AND NETWORK DEVICES**

UPLINK-ÜBERTRAGUNGSVERFAHREN, ENDGERÄTEVORRICHTUNGEN UND NETZWERKVORRICHTUNGEN

PROCÉDÉS DE TRANSMISSION DE LIAISON MONTANTE, DISPOSITIFS TERMINAUX ET DISPOSITIFS DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.03.2024 Bulletin 2024/10**

(73) Proprietor: **GUANGDONG OPPO MOBILE
TELECOMMUNICATIONS
CORP., LTD.
Dongguan, Guangdong 523860 (CN)**

(72) Inventors:
• **FANG, Yun**
**Dongguan, Guangdong 523860 (CN)**
• **CHEN, Wenhong**
**Dongguan, Guangdong 523860 (CN)**
• **SHI, Zhihua**
**Dongguan, Guangdong 523860 (CN)**
• **HUANG, Yingpei**
**Dongguan, Guangdong 523860 (CN)**

(74) Representative: **Kraus & Lederer PartGmbB
Thomas-Wimmer-Ring 15
80539 München (DE)**

(56) References cited:
**WO-A1-2020/163597**     **CN-A- 110 324 071**

• **ZTE: "Further details on Multi-beam and Multi-TRP operation", vol. RAN WG1, no. e-Meeting; 20210412 - 20210420, 7 April 2021 (2021-04-07), XP052177675, Retrieved from the Internet** <URL:https://ftp.3gpp.org/tsg_ran/WG1_RL1/ TSGR1_104b-e/Docs/R1-2102667.zip R1-2102667 **Further details on Multi-beam and Multi-TRP operation.docx> [retrieved on 20210407]**
• **SAMSUNG: "Enhancements on Multi-TRP for PDCCH, PUCCH and PUSCH", vol. RAN WG1, no. e-Meeting; 20210412 - 20210420, 7 April 2021 (2021-04-07), XP052178003, Retrieved from the Internet** <URL:https://ftp.3gpp.org/tsg_ran/ WG1_RL1/TSGR1_104b-e/Docs/R1-2103222.zip R1-2103222 MTRP PDCCH,PUSCH,PUCCH.docx> **[retrieved on 20210407]**
• **HUAWEI, HISILICON: "Enhancements on multi-TRP for reliability and robustness in Rel-17", 3GPP DRAFT; R1-2100209, vol. RAN WG1, 19 January 2021 (2021-01-19), pages 1 - 14, XP051970841**

• **OPPO: "Enhancements on multi-TRP for PDCCH, PUCCH and PUSCH", 3GPP DRAFT; R1-2100119, vol. RAN WG1, 19 January 2021 (2021-01-19), pages 1 - 16, XP051970818**

Description

## TECHNICAL FIELD

The embodiments of the present disclosure relate to the field of communication, and particularly, to an uplink transmission method, a terminal device, and a network device.

## BACKGROUND

**In** order to improve uplink transmission performance, a Multi Transmission Receive Point (MTRP)-based uplink transmission is introduced. A network device may configure a terminal device with up to two Sounding Reference Signal (SRS) resource sets for the MTRP-based uplink transmission, and set two SRS Resource Indicator (SRI) fields in Downlink Control Information (DCI) for indicating the target SRS resources in the two SRS resource sets.

**In** the related art, the terminal device may support dynamic switching between the MTRP-based uplink transmission and a Single Transmission Receive Point (STRP)-based uplink transmission. Therefore, it is desired to solve a problem of how to indicate the target SRS resource corresponding to the uplink transmission in a case where the dynamic switching between the STRP-based uplink transmission and the MTRP-based uplink transmission is supported.

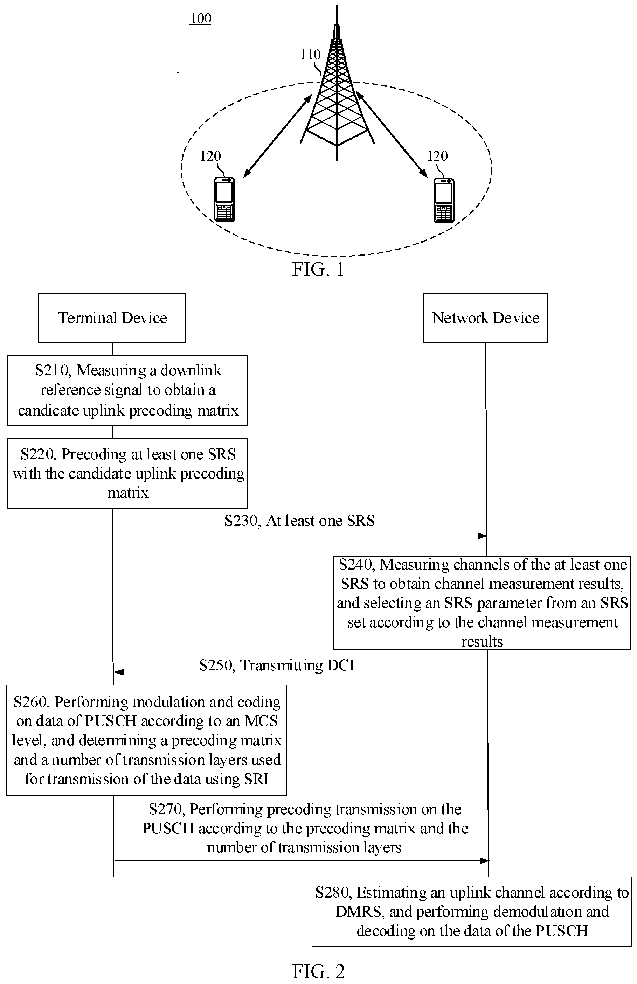

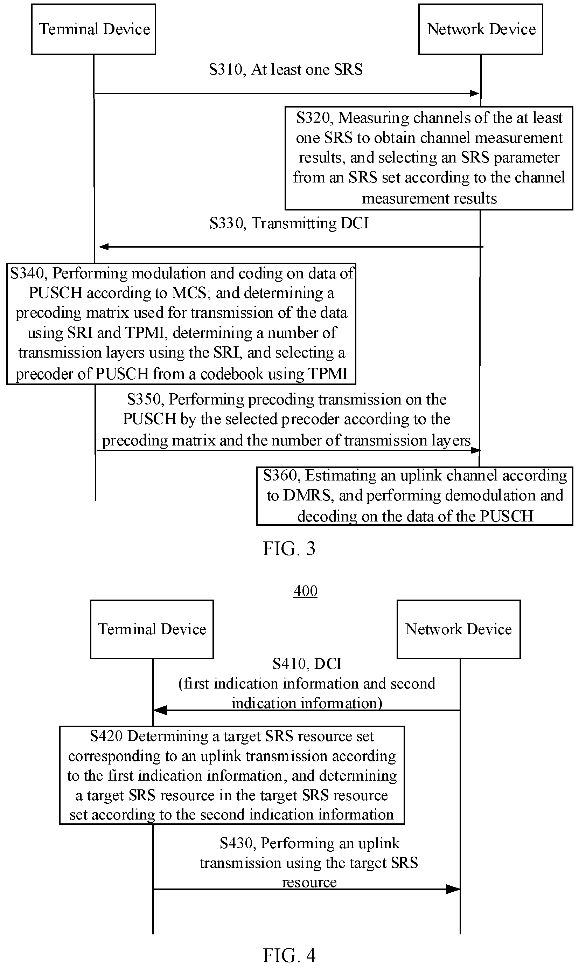

3GPP DRAFT, R1-2103222, SAMSUNG: "Enhancements on Multi-TRP for PDCCH, PUCCH and PUSCH" discloses two DCIs respectively applicable to the STRP scenario and the MTRP scenario) in FIGS. 2 and 3. In FIG. 2, an SRI in DCI is used to specify SRS resource for PUSCH repeat transmission from a resource set. In FIG. 3, two SRIs in DCI are used to respectively specify SRS resources for PUSCH repeat transmission from two resource sets.

3GPP DRAFT, R1-2102667, ZTE: "Further details on Multi-beam and Multi-TRP operation" provides further details of applying a uniform TCI state to DL/UL channel/signal in mTRP. According to this document, in the case of mTRP, a unified TCI state indicated by a TCI codepoint value in DCI format comprises one TCI state corresponding to one TRP or two TCI states corresponding to two TRPs; and up to N SRS resource sets for codebook or non-codebook can be supported/configured, and each SRS resource set is associated with a TRP ID information.

## SUMMARY

Embodiments of the present disclosure provide an uplink transmission method, a terminal device, and a network device, which may indicate the target SRS resource of the STRP-based or the MTRP-based uplink transmission.

In a first aspect, the present disclosure provides an uplink transmission method as defined in claim 1.

In a second aspect, the present disclosure provides an uplink transmission method as defined in claim 9

In a third aspect, the present disclosure provides a terminal device as defined in claim 11.

In a fourth aspect, the present disclosure provides a network device as defined in claim 12.

Further advantageous embodiments of the present disclosure are indicated in the dependent claims. It is to be understood that both the foregoing general description and the following detailed description are exemplary only, and are not restrictive of the present disclosure.

## BRIEF DESCRIPTION OF DRAWINGS

FIG. 1 is a schematic diagram of a communication system architecture according to an embodiment of the present disclosure.
FIG. 2 is a flowchart of a non-codebook-based uplink transmission scheme.
FIG. 3 is a flowchart of a codebook-based uplink transmission scheme.
FIG. 4 is a schematic interactive diagram of an uplink transmission method according to an embodiment of the present disclosure.
FIG. 5 is a schematic diagram of a terminal device according to an embodiment of the present disclosure.
FIG. 6 is a schematic diagram of a network device according to an embodiment of the present disclosure.
FIG. 7 is a schematic diagram of a communication device according to an embodiment of the present disclosure.
FIG. 8 is a schematic diagram of a chip according to an embodiment of the present disclosure.
FIG. 9 is a schematic diagram of a communication system according to an embodiment of the present disclosure.

## DESCRIPTION OF EMBODIMENTS

The technical solutions of the embodiments of the present disclosure will be described below in conjunction with the drawings of the embodiments of the present disclosure. Obviously, the embodiments described are part, but not all, of the embodiments of the present disclosure. Based on the embodiments in the present disclosure, all other embodiments that can be obtained by the skilled in the art without any inventive labor also fall into the protection scope of the present disclosure.

The technical solutions of the embodiments of the present disclosure may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolved system of NR system, an LTE-based access to unlicensed spectrum (LTE-U) system, an NR-based access to unlicensed spectrum (NR-U) system, an Non-Terrestrial Networks (NTN) system, a Universal Mobile Telecommunication System (UMTS), a Wireless Local Area Networks (WLAN), a Wireless Fidelity (WiFi), a 5th-generation (5G) Communication system, or other communication systems.

Generally, the number of connections supported by traditional communication systems is limited, and the connections are easy to implement. However, with the development of communication technology, the mobile communication system will not only support traditional communications, but also support e.g., Device to Device (D2D) communication, Machine to Machine (M2M) communication, Machine Type Communication (MTC), Vehicle to Vehicle (V2V) communication, Vehicle to everything (V2X) communication, etc. The embodiments of the present disclosure may also be applied to these communication systems.

Alternatively, the communication system in the embodiments of the present disclosure may be applied to a Carrier Aggregation (CA) scenario, or a Dual Connection (DC) scenario, or a Standalone (SA) deployment scenario.

Alternatively, the communication system in the embodiments of the present disclosure may be applied to an unlicensed spectrum, and the unlicensed spectrum may also be regarded as a shared spectrum; or the communication system in the embodiments of the present disclosure may also be applied to a licensed spectrum, and the licensed spectrum may also be regarded as a non-shared spectrum.

Various embodiments are described in the present disclosure with respect to the network device and the terminal device. The terminal device may also be called a User Equipment (UE), an access terminal, a user unit, a user station, a mobile station, a remote station, a remote terminal, a mobile device, a user terminal, a terminal, a wireless communication device, a user agent, or a user apparatus, etc.

The terminal device may be a Station (ST) in Wireless Local Area Network (WLAN), or may be a cell phone, a cordless phone, a Session Initiation Protocol (SIP) phone, a Wireless Local Loop (WLL) station, a Personal Digital Assistant (PDA) device, a handheld device with wireless communication functions, a computing device, or other processing device connected to a wireless modem, a vehicle device, a wearable device, a terminal device in a next-generation communication system, such as the NR network, or a terminal device in a future evolved Public Land Mobile Network (PLMN).

In the embodiments of the present disclosure, the terminal device may be deployed on land, including indoor or outdoor, handheld, wearable, or in vehicle; or may be deployed on the water (such as a ship); or may deployed in the air (such as a plane, a balloon, a satellite).

In the embodiments of the present disclosure, the terminal device may be a Mobile Phone, a Pad, a computer with a wireless transceiving function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

For illustration without any limitation, in the embodiments of the present disclosure, the terminal device may also be a wearable device. The wearable device may also be called a wearable smart device, which is a general term for wearable devices that are intelligently designed and developed by applying wearable technology to daily wearing, such as glasses, gloves, watches, clothing and shoes. The wearable device is a portable device that is directly worn on the body or integrated into the user's clothes or accessories. The wearable device not only is a hardware device, but also provides powerful functions by software support, data interaction and cloud interaction. A broadly defined wearable smart device includes e.g., a smart watch or smart glasses, etc., which have richer functions, a larger size, and provide all or part of functions independently of the smartphone, and e.g., a smart bracelet, a smart jewelry, etc. for sign monitoring, which only focuses on a certain type of application functions, and needs to cooperate with other devices such as the smartphone.

In the embodiments of the present disclosure, the network device may be a device for communicating with a mobile device. The network device may be an Access Point (AP) in WLAN, a Base Transceiver Station (BTS) in GSM or CDMA, or a base station (NodeB, NB) in WCDMA, or an evolved base station (Evolutional Node B, eNB or eNodeB) in LTE, or a relay or access point, or a vehicle-mounted device, a wearable device, or a network device (gNB) in the NR network, or a network device in a future evolved PLMN network, or a network device in an NTN network.

For illustration without any limitation, in the embodiments of the present disclosure, the network device may have mobile characteristics. For example, the network device may be a moving device. Alternatively, the network device may be a satellite, a balloon station, etc. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and so on. Alternatively, the network device may also be a base station located in land and water etc.

In the embodiments of the present disclosure, the network device may provide services to a cell. The terminal device may communicate with the network device over transmission resources used for the cell (e.g., frequency domain resources, or spectrum resources). The cell may be a cell corresponding to the network device (e.g., the base station). The cell may belong to a macro base station, or may belong to a base station corresponding to a Small cell. Here, the Small cell may include a Metro cell, a Micro cell, a Pico cell, a Femto cell etc. These Small cells have characteristics of smaller coverage and lower transmit power, and are suitable for providing high-speed data transmission services.

For example, a communication system 100 to which the embodiments of the present disclosure are applied is as shown in FIG. 1. The communication system 100 may include a network device 110, which may be a device that communicates with a terminal device 120 (or called a communication terminal, a terminal). The network device 110 may provide communication coverage for a specific geographical area, and may communicate with the terminal device within the coverage.

FIG. 1 exemplarily shows one network device and two terminal devices. Alternatively, the communication system 100 may include a plurality of network devices, and coverage of each network device may include other number of terminal devices, which is not limited by the embodiments of the present disclosure.

Alternatively, the communication system 100 may also include other network entities, such as a network controller, a mobile management entity etc., which is not limited by the embodiments of the present disclosure.

It should be understood that a device with communication functions in a network/system in the embodiments of the present disclosure may be called a communication device. Taking the communication system 100 as shown in FIG. 1 as an example, the communication device may include the network device 110 and the terminal device 120 with communication functions. The network device 110 and the terminal device 120 may be particular devices as described above, which will not be described repetitively. The communication device may also include other devices in the communication system 100, such as a network controller, a mobile management entity, and other network entities, which is not limited by the embodiments of the present disclosure.

It should be understood that the terms "system" and "network" are often interchangeable throughout the specification. The term "and/or" herein just defines some association between associated objects, which means that there may be three relationships. For example, A and/or B may include three cases where there is only A, there are both A and B, and there is only B. In addition, the character "/" herein generally indicates that the contextual objects are in an "or" relationship.

It should be understood that "indicating" mentioned in the embodiments of the present disclosure may be a direct indication, or an indirect indication, and may also mean that there is some association therebetween. For example, A indicating B may mean that A directly indicates B, for example, B may be obtained from A; or may mean that A indirectly indicates B, for example, A indicates C, and B may be obtained from C; or may mean that there is some association between A and B.

In the embodiments of the present disclosure, the term "corresponding" may mean that there is a direct correspondence or an indirect correspondence between the both, or that there is an association, or indicating and indicated, or configuring and configured, between the both.

In the embodiments of the present disclosure, the term "predefined" may be implemented by saving corresponding codes or tables in the device (e.g., the terminal device or the network device) in advance or in other ways applicable to indicate related information, which is not particularly limited in the embodiments of the present disclosure. For example, "predefined" may refer to being defined in protocols.

In the embodiment of the present disclosure, "protocol" may refer to a standard protocol in the communication field, for example, it may include an LTE protocol, an NR protocol, and related protocols applied to the future communication systems, which are not limited in the present disclosure.

In order to facilitate to understand the technical solutions of the embodiments of the present disclosure, the technical solutions of the present disclosure will be described below in detail by particular embodiments. The following related technologies, as alternatives, may be arbitrarily combined with the technical solutions of the embodiments of the present disclosure, all of which fall into the protection scope of the embodiments of the present disclosure. The embodiments of the present disclosure include at least part of the following content.

Before introducing the technical solutions of the present disclosure, SRS, a non-codebook-based uplink transmission scheme, a codebook-based uplink transmission scheme, and how to indicate SRS resources in an uplink transmission scheme will be introduced first.

1. SRS

The SRS may be used for Channel State Information (CSI) acquisition, downlink channel information acquisition, and uplink beam management. The NR system performs SRS management and configuration in an approach of SRS resource set. The network device may configure a plurality of SRS resource sets for a terminal device according to different purposes. Each SRS resource set includes one or more SRS resources, and each SRS resource contains 1, 2 or 4 ports. Configuration information of each SRS resource set contains a usage indicator, which may be configured as "beamManagement", "codebook", "nonCodebook", or "antennaswitching" respectively for uplink beam management, codebook-based CSI acquisition, non-codebook-based CSI acquisition, and downlink channel information acquisition based on SRS antenna switching.

2. Non-Codebook-Based Uplink Transmission Scheme

A difference between the non-codebook-based uplink transmission scheme and the codebook-based uplink transmission scheme is that the non-codebook-based uplink transmission scheme is no longer limited to a limited number of candidate sets based on a fixed codebook, and the terminal device determines an uplink precoding matrix according to channel reciprocity. If the channel reciprocity is good enough, the terminal device may obtain better uplink precoding. Compared to the codebook-based transmission scheme, it may save overhead of precoding indication, and also achieve better performance.

FIG. 2 is a schematic flowchart of a non-codebook-based uplink transmission scheme. As shown in FIG. 2, the non-codebook-based uplink transmission scheme includes the following actions.

At S210, the terminal device measures a downlink reference signal to obtain a candidate uplink precoding matrix.

At S220, the terminal device precodes, with the candidate uplink precoding matrix, at least one SRS for a non-codebook-based uplink transmission scheme.

At S230, the terminal device transmits the at least one SRS to the network device.

At S240, the network device measures channels of the at least one SRS to obtain channel measurement results, and selects an SRS parameter from an SRS set according to the channel measurement results, the SRS parameter including at least one of: SRS resources, a number of transmission layers, Demodulation Reference Signal (DMRS) port indication information, PUSCH resource allocation, or a corresponding Modulation and Coding Scheme (MCS) level.

At S250, the network device transmits Downlink Control Information (DCI) to the terminal device.

The DCI includes SRI, DMRS port indication information, PUSCH resource allocation, and the corresponding MCS level. The SRI indicates SRS resources selected by the network device.

At S260, the terminal device performs modulation and coding on data of PUSCH according to the MCS level, and determines, using the SRI, a precoding matrix and a number of transmission layers used for transmission of the data.

At S270, the terminal device performs precoding transmission on the PUSCH according to the precoding matrix and the number of transmission layers.

The DMRS of the PUSCH and the data of the PUSCH use the same precoding.

At S280, the network device estimates an uplink channel according to the DMRS, and performs demodulation and decoding on the data of the PUSCH.

For the non-codebook-based uplink transmission scheme, the network device may configure the terminal device with one SRS resource set for uplink CSI acquisition. The SRS resource set contains 1 to 4 SRS resources. Each SRS resource contains one SRS port. The SRI may indicate one or more SRS resources selected by the network device for determination of PUSCH precoding. The number of SRS resources indicated by the SRI is the number of transmission layers of the PUSCH. That is, the number of the transmission layers of the PUSCH correspond to the SRS resources indicated by the SRI in a one-to-one correspondence.

For the non-codebook-based uplink transmission scheme, the terminal device needs to, based on channel reciprocity, obtain uplink precoding information according to the downlink reference signal. One terminal device may be configured with a plurality of downlink reference signals, some of which may be used for beam management, some of which may be used for downlink CSI measurement, and some of which may be used for demodulation of downlink channels. In order to enable the terminal device to get better candidate precoding for the non-codebook-based uplink transmission scheme, the network device in the NR system is allowed to configure, for the SRS resource set for the non-codebook-based uplink transmission scheme, an associate NZP CSI-RS resource for channel measurement. The terminal device may obtain, according to the associate NZP CSI-RS resource, precoding for SRS signal transmission for SRS resource set for the non-codebook-based uplink transmission scheme.

3. Codebook-Based Uplink Transmission Scheme

FIG. 3 is a flowchart of a codebook-based uplink transmission scheme. As shown in FIG. 3, the codebook-based uplink transmission scheme in an NR system R16 includes the following actions.

At S310, the terminal device transmits at least one SRS to the network device according to SRS resources configured by the network device.

At S320, the network device measures the channels of at least one SRS to obtain the channel measurement results, and select an SRS parameter from an SRS set according to the channel measurement results. The SRS parameter includes at least one of: SRS resources, TPMI, DMRS port indication information, PUSCH resource allocation, or a corresponding MCS level.

At S330, the network device transmits DCI to the terminal device.

The DCI includes SRI, TPMI, DMRS port indication information, PUSCH resource allocation, and a corresponding MCS level. The SRI indicates SRS resources selected by network device.

At S340, the terminal device performs modulation and coding on data of PUSCH according to the MCS; and determines a precoding matrix used for transmission of the data using the SRI and the TPMI, determines a number of transmission layers using the SRI, and selects a precoder of PUSCH from a codebook using the TPMI.

At S350, the terminal device performs precoding transmission on the PUSCH by the selected precoder according to the precoding matrix and the number of transmission layers.

The DMRS of the PUSCH and the data of the PUSCH use the same precoding.

At S360, the network device estimates an uplink channel according to the DMRS, and performs demodulation and decoding on the data of the PUSCH.

The network device indicates, to the terminal device, the selected SRS resources by the SRI in the DCI, so as to assist the terminal device to determine antennas and analog beamforming etc. used for the PUSCH transmission according to the SRS resources selected by the network device. Since the numbers of SRS resources configured by the network device for different uplink transmission schemes may be different, determining the number of bits occupied by the SRI based on the uplink transmission scheme may reduce the SRI overhead. Therefore, the number of bits occupied by the SRI depends on the number of SRS resources configured for the uplink transmission scheme. When the network device only configures one SRS resource for an uplink transmission scheme of the terminal device, the PUSCH under this uplink transmission scheme corresponds to the SRS resource. Therefore, there may be no SRI field in the DCI.

4. SRI in Codebook-Based Uplink Transmission Scheme

The downlink control channel carries the DCI transmitted by the network device to the terminal device. DCI format 0_0, DCI format 0_1 and DCI format 0_2 are used to schedule the PUSCH. In DCI format 0_1 and DCI format 0_2, there is one SRI field, which carries the SRI. In the non-codebook-based uplink transmission scheme, since one SRS resource corresponds to one transmission layer, the network device performs uplink channel detection based on the SRS transmitted by the terminal device, selects one or more SRS resources, and indicates to the terminal device by the SRI. The SRI field occupies $\left\lceil \log_2 \left( \sum_{k=1}^{\min\{L_{\max}, N_{SRS}\}} \binom{N_{SRS}}{k} \right) \right\rceil$ bits, where $N_{SRS}$ is the number of SRS resources in the SRS resource set configured for the non-codebook transmission, and $L_{\max}$ is the maximum number of configurable layers. In the codebook transmission, since only one SRS resource is selected as a resource reference for uplink transmission each time, the SRI field occupies $\left\lceil \log_2 \left( N_{SRS} \right) \right\rceil$ bits, where $N_{SRS}$ is the number of SRS resources in the SRS resource set configured for the non-codebook transmission.

In the MTRP-based PUSCH repetition scheme for a single DCI, the following schemes are supported in the codebook-based PUSCH:

DCI including two SRI fields that respectively correspond to two SRS resource sets is supported, where the DCI is DCI format0_1 or DCI format0_2. The SRI indicated by each SRI field corresponds to one TRP, and the framework of the SRI field may refer to the framework of the SRI field in R15 or R16.

Dynamic switching between MTRP and STRP is supported.

In the MTRP-based PUSCH repetition scheme for a single DCI, the following schemes are supported in the non-codebook-based PUSCH:

DCI including two SRI fields that respectively correspond to two SRS resource sets is supported, where the DCI is DCI format0_1 or DCI format0_2. The SRI indicated by each SRI field corresponds to one TRP, and the framework of the SRI field may refer to the framework of the SRI field in R15 or R16.

The same number of layers being used for repetitive transmissions is supported.

Dynamic switching between the MTRP and the STRP is supported.

In some scenarios, it is considered to add a new field in the DCI to indicate whether the uplink transmission is directed to the STRP or the MTRP. For example, 1 or 2 bits are newly added to indicate whether the uplink transmission scheduled by the DCI is directed to the STRP or the MTRP. In this case, when the uplink transmission is directed to the STRP, how to determine the target SRS resource corresponding to the uplink transmission is an urgent problem to be solved.

FIG. 4 is a schematic interaction diagram of an uplink transmission method 400 according to an embodiment of the present disclosure. As shown in FIG. 4, the method 400 includes:

S410, in which the terminal device receives Downlink Control Information (DCI) transmitted by the network device, the DCI being used to schedule the terminal device to transmit an uplink transmission, and the DCI including first indication information and second indication information.

In the present disclosure, the first indication information indicates a target Sounding Reference Signal (SRS) resource set corresponding to the uplink transmission, the target SRS resource set including at least one of a first SRS resource set or a second SRS resource set.

In the present disclosure, the target SRS resource set is an SRS resource set corresponding to the uplink transmission when the uplink transmission is transmitted to a Single Transmission Receive Point (STRP) or a Multi Transmission Receive Point (MTRP).

In the present disclosure, the second indication information is used to determine the target SRS resource corresponding to the uplink transmission in the target SRS resource set.

It should be understood that the present disclosure only takes two SRS resource sets configured on the terminal device as an example for illustration. In other embodiments, the terminal device may be configured with more SRS resource sets, e.g., the third SRS resource set, the fourth SRS resource set, etc., and the particular resource indication way is similar, and description thereof will not be repeated here for brevity.

In some embodiments, the number of the target SRS resource set indicates that a target TRP of the uplink transmission is an STRP or an MTRP. For example, if the number of the target SRS resource set is one, it means that the target TRP of the uplink transmission is an STRP, while if the number of the target SRS resource set is multiple, it means that the target TRP of the uplink transmission is an MTRP.

In some other embodiments, the first indication information further indicates that the target TRP of the uplink transmission is an STRP or an MTRP. That is, the first indication information may indicate the target TRP of the uplink transmission and the target SRS resource set corresponding to the uplink transmission.

That is to say, whether the target TRP of the uplink transmission is an STRP or an MSTR may be indicated explicitly, or may be determined according to the number of target SRS resource sets, which is not limited by the present disclosure. In some embodiments, the first indication information may reuse the existing field in the DCI, such as a reserved field or reserved bit(s).

In some other embodiments, the first indication information may be a newly added field in the DCI. For example, a newly added field in the DCI may indicate the target SRS resource set corresponding to the uplink transmission scheduled by the DCI, or a newly added field in the DCI may indicate the target TRP of the uplink transmission and the target SRS resource set corresponding to the uplink transmission.

In some embodiments, the second indication information may be carried by at least one field in the DCI.

In some embodiments, the first indication information and the second indication information are carried in different fields in the DCI.

In some embodiments, the first indication information is of 2 bits, or may be of other number of bits, which may be particularly determined according to content that needs to be indicated.

As an example, different values represented by the 2 bits indicate the target TRP and the target SRS resource set of the uplink transmission. For example, a value of 00 indicates that the target TRP is an STRP, and the target SRS resource set corresponding to the uplink transmission is the first SRS resource set; a value of 01 indicates that the target TRP is an STRP, and the target SRS resource set corresponding to the uplink transmission is the second SRS resource set; and a value of 10 indicates that the target TRP is an MTRP, and the target SRS resource set corresponding to the uplink transmission includes the first SRS resource set and the second SRS resource set.

In some embodiments, the terminal device may also receive configuration information from the network device for the uplink transmission, such as information indicating that a codebook-based transmission or a non-codebook-based transmission are configured; information on candidate SRS resource sets, such as for example, information indicating that the first SRS resource set and the second SRS resource set are included, and information on SRS resources included in the candidate SRS resource set, such as information indicating the SRS resources included in the first SRS resource set and the second SRS resource set, etc.

In some embodiments of the present disclosure, the uplink transmission may be a codebook-based PUSCH transmission, or a non-codebook-based PUSCH transmission, such as a codebook-based or non-codebook-based PUSCH retransmission.

In some embodiments, if the target SRS resource set include a plurality of SRS resource sets, the terminal device transmits the same uplink transmission, e.g., the same PUSCH, over a plurality of SRS resources in the plurality of SRS resource sets.

In some embodiments of the present disclosure, in a codebook-based transmission mode, the second indication information is used to determine the target SRS resources in the target SRS resource set; and in a non-codebook-based transmission mode, the second indication information is used to determine layer information of the uplink transmission and the target SRS resource corresponding to the uplink transmission in the target SRS resource set.

In some embodiments of the present disclosure, the method 400 further includes:

S420, in which a target SRS resource set corresponding to the uplink transmission is determined according to the first indication information, and a target SRS resource corresponding to the uplink transmission in the target SRS resource set is determined according to the second indication information; and
S430, in which the target SRS resource is used for the uplink transmission.

In some embodiments of the present disclosure, the second indication information includes a plurality of pieces of resource indication information. In a case where the target TRP is an MTRP, or in other words, the target SRS resource set includes a plurality of SRS resource sets, the plurality of pieces of resource indication information are in one-to-one correspondence with the plurality of SRS resource sets, and each piece of resource indication information is used to determine the target SRS resource in the corresponding SRS resource set.

In the present disclosure, the second indication information includes first resource indication information and second resource indication information. In an MTRP scenario, the first resource indication information corresponds to the first SRS resource set, and the second resource indication information corresponds to the second SRS resource set. The first resource indication information is used to determine the target SRS resource in the first SRS resource set, and the second resource indication information is used to determine the target SRS resource in the second SRS resource set.

In some embodiments, the first SRS resource set is the first one of the plurality of SRS resource sets, the second SRS resource set is the second one of the plurality of SRS resource sets, the first resource indication information is the first piece of resource indication information in the DCI, and the second resource indication information is the second piece of resource indication information in the DCI. That is, the target SRS resource in the respective ones among the plurality of SRS resource sets may be indicated sequentially by the resource indication information in the DCI.

In some embodiments, the first resource indication information is carried in the first SRS resource indicator field in the DCI, and the second resource indication information is carried in the second SRS resource indicator field in the DCI.

Alternatively, the first SRS resource indicator field may be the first SRS resource indicator field in the DCI, and the second SRS resource indicator field is the second SRS resource indicator field in the DCI.

In some other embodiments, the first resource indication information is carried in the first Transmission Precoding Matrix Indicator (TPMI) field in the DCI, and the second resource indication information is carried in the second TPMI indicator field in the DCI.

In the embodiments of the present disclosure, for convenience of distinction and description, the case where the target SRS resource set includes one SRS resource set, or in other words, the target TRP corresponding to the uplink transmission is an STRP, is referred to as an STRP scenario, and the case where the target SRS resource sets include a plurality of SRS resource sets, or in other words, the target TRP corresponding to the uplink transmission is an MTRP, is referred to as an MTRP scenario.

Hereinafter, particular implementations of indicating the target SRS resource by the first resource indication information and the second resource indication information will be described in conjunction with particular embodiments, but the present disclosure is not limited thereto.

Embodiment 1: In an STMP scenario, SRS resources in different target SRS resource sets are indicated by the same resource indication information.

Embodiment 1 may be applied to the codebook-based uplink transmission.

As an example, in the STRP scenario, no matter which of SRS resource sets is the target SRS resource set, the terminal device determines the target SRS resource in the target SRS resource set always according to the first resource indication information.

In the present disclosure, in the case where the target SRS resource set includes one SRS resource set, the first resource indication information is used to determine the target SRS resource in the target SRS resource set.

Alternatively, in Embodiment 1, S420 may include:

if the target SRS resource set corresponding to the uplink transmission is the first SRS resource set, determining the target SRS resource in the target SRS resource set according to the first resource indication information; or
if the target SRS resource set corresponding to the uplink transmission is the second SRS resource set, determining the target SRS resource in the target SRS resource set according to the first resource indication information.

Alternatively, in the STRP scenario, the terminal device does not parse the second resource indication information.

Alternatively, in an MTRP scenario, the first resource indication information corresponds to the first SRS resource set, the second resource indication information corresponds to the second SRS resource set, the first resource indication information is used to determine the target SRS resource in the first SRS resource set, and the second resource indication information is used to determine the target SRS resource in the second SRS resource set.

That is, in the MTRP scenario, different SRS resource sets correspond to different resource indication information, and the terminal device determines the target SRS resource in the target SRS resource set according to the resource indication information corresponding to the target SRS resource set.

The way of how to indicate the target SRS resource of the uplink transmission is described above, and the number of bits required for the above-mentioned content indicated by the first resource indication information and the second resource indication information will be described hereinafter.

It should be understood that in the embodiments of the present disclosure, since the DCI needs to support dynamic switching between the STRP and the MSTR, a larger number of bits occupied by the resource indication information is taken in consideration of those two scenarios of STRP and MTRP, when the resource indication information is designed.

For example, in the STRP scenario, the first resource indication information needs 3 bits, and the second resource indication information needs 1 bit. In the MTRP scenario, the first resource indication information needs 3 bits, and the second resource indication information needs 4 bits. Thus, the number of bits occupied by the first resource indication information is the larger value of the numbers of bits occupied by the first resource indication information in those two scenarios, that is, 3 bits, and the number of bits occupied by the second resource indication information is the larger value of the numbers of bits occupied by the second resource indication information in those two scenarios, that is, 4 bits.

With regard to Embodiment 1, in the STRP scenario, the target SRS resources in the two SRS resource sets are indicated by the first resource indication information. Therefore, the first resource indication information is related to the numbers of SRS resources in both of the two SRS resource sets.

In some embodiments of the present disclosure, in the STRP scenario, the number of bits occupied by the first resource indication information is determined according to at least one of:

a transmission mode configured by the network device; or

$N_{max}$, where $N_{max}$, represents a larger value of a number $N_1$ of SRS resources included in the first SRS resource set and a number $N_2$ of SRS resources included in the second SRS resource set.

With regard to Embodiment 1, in the MTRP scenario, the first resource indication information only indicates the target SRS resource in the first SRS resource set. Therefore, the first resource indication information is related to the number of SRS resources in the first SRS resource set.

In some embodiments of the present disclosure, in the MTRP scenario, the number of bits occupied by the first resource indication information is determined according to at least one of:

the transmission mode configured by the network device; or

the number $N_1$ of SRS resources included in the first SRS resource set.

By comparison, the number of bits occupied by the first resource indication information in the STRP scenario is greater than or equal to the number of bits occupied by the first resource indication information in the MTRP scenario. Therefore, a target number of bits occupied by the first resource indication information may be determined according to the number of bits occupied by the first resource indication information in the STRP scenario.

In some embodiments, in a case where the network device configures a codebook-based transmission mode, the target number of bits occupied by the first SRS resource indication information is determined according to a formula

$$\left\lceil \log_2 N_{max} \right\rceil.$$

With regard to Embodiment 1, in the STMP scenario, the target SRS resources are not indicated by the second resource indication information. Therefore, a target number of bits of the second resource indication information may be determined according to the number of bits occupied by the second resource indication information in the MTRP scenario. In the MTRP scenario, the second resource indication information only indicates the target SRS resource in the second SRS resource set. Therefore, the second resource indication information is related to the number of SRS resources in the second SRS resource set.

In some embodiments of the present disclosure, in the MTRP scenario, the number of bits occupied by the second resource indication information is determined according to at least one of:

the transmission mode configured by the network device; or

the number $N_2$ of SRS resources included in the second SRS resource set.

In some embodiments, in the case where the network device configures the codebook-based transmission mode, the target number of bits occupied by the second SRS resource indication information is determined according to a formula $\lceil \log_2 N_2 \rceil$.

As an example, if both the numbers of SRS resources in the first SRS resource set and the second SRS resource set are equal to 2, the first resource indication information may be indicated by 1 bit, and the second resource indication information may be indicated by 1 bit.

As another example, if the number of SRS resources in the first SRS resource set is 2, and the number of SRS resources in the second SRS resource set is 4, the first resource indication information may be indicated by 2 bits, and the second resource indication information may be indicated by 2 bits.

Embodiment 2: In an STMP scenario, the target SRS resources in different target SRS resource sets are indicated by different resource indication information.

Embodiment 2 may be applied to the codebook-based uplink transmission.

As an example, the first resource indication information corresponds to the first SRS resource set, and the second resource indication information corresponds to the second SRS resource set. The first resource indication information is used to determine the target SRS resource in the first SRS resource set, and the second resource indication information is used to determine the target SRS resource in the second SRS resource set.

That is, in a case where the terminal device is configured with a plurality of SRS resource sets, each of plurality of SRS resource sets corresponds to corresponding resource indication information, which is used to determine the target SRS resource in the corresponding SRS resource set.

Alternatively, in Embodiment 2, S420 may include:

if the target SRS resource set corresponding to the uplink transmission is the first SRS resource set, determining the target SRS resource in the target SRS resource set according to the first resource indication information; or
if the target SRS resource set corresponding to the uplink transmission is the second SRS resource set, determining the target SRS resource in the target SRS resource set according to the second resource indication information.

That is, in the STRP scenario, the terminal device determines the target SRS resource in the target SRS resource set according to the resource indication information corresponding to the target SRS resource set.

The way of how to indicate the target SRS resource of the uplink transmission is described above, and the number of bits required for the above-mentioned content indicated by the first resource indication information and the second resource indication information will be described hereinafter.

It should be understood that in the embodiments of the present disclosure, since the DCI needs to support dynamic switching between the STRP and the MSTR, a larger number of bits occupied by the resource indication information is taken in consideration of those two scenarios of STRP and MTRP, when the resource indication information is designed.

In Embodiment 2, since each piece of resource indication information indicates the target SRS resource in the corresponding SRS resource set, the number of bits occupied by the resource indication information is related to the number of SRS resources included in the corresponding SRS resource set.

In some embodiments of the present disclosure, in the STRP scenario, the number of bits occupied by the first resource indication information is determined according to at least one of:

a transmission mode configured by the network device; or
a number $N_1$ of SRS resources included in the first SRS resource set.

In some embodiments of the present disclosure, in the MTRP scenario, the number of bits occupied by the first resource indication information is determined according to at least one of:

the transmission mode configured by the network device; or
the number $N_1$ of SRS resources included in the first SRS resource set.

That is, the number of bits occupied by the first resource indication information in the STRP scenario is equal to the number of bits occupied by the first resource indication information in the MTRP scenario.

As an example, in a case where the network device configures a codebook-based transmission mode, the number of bits occupied by the first SRS resource indication information is determined according to a formula $\lceil \log_2 N_1 \rceil$.

In some embodiments of the present disclosure, in the STRP scenario, the number of bits occupied by the second resource indication information is determined according to at least one of:

the transmission mode configured by the network device; or
a number $N_2$ of SRS resources included in the second SRS resource set.

In some embodiments of the present disclosure, in the MTRP scenario, the number of bits occupied by the second resource indication information is determined according to at least one of:

the transmission mode configured by the network device; or
the number $N_2$ of SRS resources included in the second SRS resource set.

As an example, in the case where the network device configures the codebook-based transmission mode, the number of bits occupied by the second SRS resource indication information is determined according to a formula $\lceil \log_2 N_2 \rceil$.

As an example, if both the numbers of SRS resources in the first SRS resource set and the second SRS resource set are equal to 2, the first resource indication information and the second resource indication information may each be indicated by 1 bit.

As another example, if the number of SRS resources in the first SRS resource set is 2, and the number of SRS resources in the second SRS resource set is 4, the first resource indication information may be indicated by 1 bit, and the second resource indication information may be indicated by 2 bits.

Embodiment 3: Layer information of the uplink transmission is indicated by one piece of resource indication information, and the target SRS resource corresponding to the uplink transmission is indicated by another piece of resource indication information.

Embodiment 3 may be applied to the non-codebook-based uplink transmission.

As an example, in the STRP scenario, the first resource indication information is used to determine the layer information of the uplink transmission, and the second resource indication information is used to determine the target SRS resources corresponding to the uplink transmission in the target SRS resource set. That is, the second resource indication information may be used to indicate a SRS resource combination corresponding to the layer information indicated by the first resource indication information.

Alternatively, in the non-codebook-based transmission mode, the number of SRS resources for uplink transmission represents the number of layers for uplink transmission. That is, in the non-codebook-based transmission mode, the layer information of the uplink transmission may be the number of SRS resources used for uplink transmission.

Alternatively, in the MTRP scenario, the first resource indication information corresponds to the first SRS resource set, and the second resource indication information corresponds to the second SRS resource set. The first resource indication information is used to determine the layer information of the uplink transmission and the target SRS resource of the uplink transmission in the first SRS resource set, and the second resource indication information is used to determine the layer information of the uplink transmission and the target SRS resource of the uplink transmission in the second SRS resource set.

Alternatively, in the MTRP scenario, the first resource indication information corresponds to the first SRS resource set, and the second resource indication information corresponds to the second SRS resource set. The first resource indication information is used to determine the layer information of the uplink transmission and the target SRS resource of the uplink transmission in the first SRS resource set, and the second resource indication information is used to determine the target SRS resource of the uplink transmission in the second SRS resource set.

That is, in the MTRP scenario, the first resource indication information may indicate the layer information of the uplink transmission and the target SRS resource information of the uplink transmission in the first SRS resource set, and the second resource indication information may indicate the layer information of the uplink transmission and the target SRS resource information of the uplink transmission in the second SRS resource set. Alternatively, the first resource indication information may indicate the layer information of the uplink transmission and the target SRS resource information of the uplink transmission in the first SRS resource set, and the second resource indication information may indicate the target SRS resource information of the uplink transmission in the second SRS resource set. That is, the second resource indication information may only indicate resource combination, but does not indicate the layer information of the uplink transmission.

Alternatively, in Embodiment 3, S420 may include:

if the target SRS resource set corresponding to the uplink transmission is the first SRS resource set, determining the layer information of the uplink transmission according to the first resource indication information, and determining the target SRS resource of the uplink transmission in the first SRS resource set according to the second resource indication information; or

if the target SRS resource set corresponding to the uplink transmission is the second SRS resource set, determining the layer information of the uplink transmission according to the first resource indication information, and determining the target SRS resource of the uplink transmission in the second SRS resource set according to the second resource indication information.

That is, in the STRP scenario, no matter which of SRS resource sets is the target SRS resource set, the terminal device determines the layer information of the uplink transmission always according to the first resource indication information, and determines the target SRS resource of the uplink transmission in the target SRS resource set according to the second resource indication information.

Alternatively, in the non-codebook-based transmission mode, the maximum number of layers of the uplink transmission cannot exceed the maximum number $L_{max}$ of layers supported by the terminal device, and cannot exceed the number of ports included in the SRS resource set, or in other words, cannot exceed the maximum configurable number of layers for the SRS resource set.

For example, for the non-codebook-based transmission mode, in the MTRP scenario, the maximum number $L_{max}$ of layers of the uplink transmission cannot exceed the maximum number of layers supported by the terminal device, and cannot exceed the smaller value of the number of ports (or in other words, the number of SRS resources) included in the first SRS resource set and the number of ports included in the second SRS resource set.

As an example, for the MTRP scenario, the maximum number of layers of the uplink transmission may be determined according to a formula $\min(L_{max}, N_{min})$ , where $N_{min}$ represents the smaller value of the number $N_1$ of SRS resources included in the first SRS resource set and the number $N_2$ of SRS resources included in the second SRS resource set.

For example, for the non-codebook-based transmission mode, in the STRP scenario, the maximum number of layers of the uplink transmission cannot exceed the maximum number $L_{max}$ of layers supported by the terminal device, and cannot exceed the smaller value of the number of ports included in the first SRS resource set and the number of ports included in the second SRS resource set, or cannot exceed the number of ports included in the target SRS resource set.

Approach 1: for the STRP scenario, the maximum number of layers of the uplink transmission may be determined according to the formula $\min(L_{max}, N_{min})$, where $N_{min}$ represents the smaller value of the number $N_1$ of SRS resources included in the first SRS resource set and the number $N_2$ of SRS resources included in the second SRS resource set.

Approach 2: for the STRP scenario, the maximum number of layers of the uplink transmission may be determined according to the formula $\min(L_{max}, N_o)$, where $N_o$ represents the number of SRS resources included in the target SRS resource set.

The way of how to indicate the target SRS resource of the uplink transmission is described above, and the number of bits required for the above-mentioned content indicated by the first resource indication information and the second resource indication information will be described hereinafter.

It should be understood that in the embodiments of the present disclosure, since the DCI needs to support dynamic switching between the STRP and the MSTR, a larger number of bits occupied by the resource indication information is taken in consideration of those two scenarios of STRP and MTRP, when the resource indication information is designed.

In some embodiments of the present disclosure, in the STRP scenario, the number of bits occupied by the first resource indication information is determined according to at least one of:

the transmission mode configured by the network device;

the maximum number $L_{max}$ of layers supported by the terminal device;

the number $N_1$ of SRS resources included in the first SRS resource set; or

the number $N_2$ of SRS resources included in the second SRS resource set.

In this Embodiment 3, in the STRP scenario, since the layer information of the uplink transmission in different target SRS resource sets is indicated by the same resource indication information, when the maximum number of layers of the uplink transmission is related to the number of SRS resources in the target SRS resource set, it is necessary to consider the number of bits occupied by the layer information in the SRS resource set that includes a larger number of SRS resources; or, when the maximum number of layers of the uplink transmission is related to $N_{min}$, it is necessary to consider the number of bits occupied by the layer information in the SRS resource set that includes a smaller number of SRS resources.

For example, the number of bits occupied by the first resource indication information may be determined according to $L_{max}$ and $N_{min}$, or determined according to $L_{max}$ and $N_{max}$, where $N_{max}$ represents the larger value of the number $N_1$ of SRS resources included in the first SRS resource set and the number $N_2$ of SRS resources included in the second SRS resource set.

As an example, in the STRP scenario, when the network device configures the non-codebook-based transmission mode, the number of bits occupied by the first resource indication information is determined according to a formula

$$\lceil \log_2 \min(L_{max}, N_{min}) \rceil$$ . In this case, the maximum number of layers of the uplink transmission is restricted by the smaller number of ports in the two SRS resource sets.

As another example, in the STRP scenario, when the network device configures the non-codebook-based transmission mode, the number of bits occupied by the first resource indication information is determined according to a

formula $$\lceil \log_2 \min(L_{max}, N_{max}) \rceil$$ . In this case, the maximum number of layers of the uplink transmission is restricted by the number of ports in the target SRS resource set.

In some embodiments of the present disclosure, in the MTRP scenario, the number of bits occupied by the first resource indication information is determined based on the total number of SRS resource combinations corresponding to respective numbers of layers of the uplink transmission in the first SRS resource set.

It should be noted that in the embodiments of the present disclosure, each number of layers of the uplink transmission may refer to each number of layers for the maximum number of layers of the uplink transmission. For example, if the maximum number of layers of the uplink transmission is 2, each number of layers of the uplink transmission may include two cases of one layer and two layers of the uplink transmission. For another example, if the maximum number of layers of the uplink transmission is 4, each number of layers of the uplink transmission may include four cases of one layer, two layers, three layers, and four layers of the uplink transmission. The determination of the maximum number of layers of the uplink transmission may refer to the related description discussed above.

Alternatively, each number of layers of the uplink transmission may refer to each type of the number of SRS resources corresponding to the uplink transmission, and each type of the number of SRS resources corresponding to the uplink transmission cannot exceed the maximum number of layers of the uplink transmission.

For example, if the maximum number of layers of the uplink transmission is 2, multiple types of the number of SRS resources of the uplink transmission may include two cases of performing the uplink transmission over one SRS resource and performing the uplink transmission over two SRS resources.

For another example, if the maximum number of layers of the uplink transmission is 4, multiple types of the number of SRS resources of the uplink transmission may include four cases of performing the uplink transmission over one SRS resource, performing the uplink transmission over two SRS resources, performing the uplink transmission over three SRS resources, and performing the uplink transmission over four SRS resources.

Alternatively, each number of layers of the uplink transmission may also be referred to as the uplink transmission per rank.

Alternatively, the SRS resource combination corresponding to each number of layers of the uplink transmission may refer to the SRS resource combination that may be used when the uplink transmission is performed over the SRS resources of the same number.

How to determine the total number of SRS resource combinations corresponding to respective numbers of layers of the uplink transmission in the first SRS resource set will be described by taking the first SRS resource set including four SRS resources (i.e., SRS Resource 1 to 4) and the maximum number of layers of the uplink transmission being 4 as an example. As shown in Table 1, when the uplink transmission is performed over one SRS resource, any one of the four SRS resources may be used for the uplink transmission, that is, four SRS resources need to be indicated by one layer; when the uplink transmission is performed over two SRS resources, any two of the four SRS resources may be used for the uplink transmission, that is, six SRS resource combinations need to be indicated by two layers; when the uplink transmission is performed over three SRS resources, any three of the four SRS resources may be used for the uplink transmission, that is, three SRS resource combinations need to be indicated by three layers; and when the uplink transmission is performed over four SRS resources, all of the four SRS resources may be used for the uplink transmission, that is, one SRS resource combination needs to be indicated by four layers. In summary, the total number of SRS resource combinations corresponding to respective numbers of layers of the uplink transmission in the first SRS resource set is 4+6+4+1=15.

Table 1

| SRS Resource 1 |
| --- |
| SRS Resource 2 |
| SRS Resource 3 |

(continued)

| |
|---|
| SRS Resource 4 |
| SRS Resources 1 and 2 |
| SRS Resources 1 and 3 |
| SRS Resources 1 and 4 |
| SRS Resources 2 and 3 |
| SRS Resources 2 and 4 |
| SRS Resources 3 and 4 |
| SRS Resources 1 and 2 and 3 |
| SRS Resources 1 and 2 and 4 |
| SRS Resources 1 and 3 and 4 |
| SRS Resources 2 and 3 and 4 |
| SRS Resources 1 and 2 and 3 and 4 |

In summary, the total number of SRS resource combinations corresponding to respective numbers of layers of the uplink transmission in the first SRS resource set is determined according to the formula $\sum_{k=1}^{\min\{L_{\max},N_{\min}\}} \binom{N_1}{k}$.

Further, in some embodiments, in the MTRP scenario, when the network device configures the non-codebook-based transmission mode, the number of bits occupied by the first resource indication information is determined according to a formula $\left\lceil \log_2 \left( \sum_{k=1}^{\min\{L_{\max},N_{\min}\}} \binom{N_1}{k} \right) \right\rceil$.

When the number of layers k=1, it means that there are $N_1$ SRS resources; when the number of layers k=2, it means that there are $C_{N_1}^2$ SRS resource combinations; and so on ..., so as to obtain the total number of SRS resource combinations corresponding to respective numbers of layers of the uplink transmission under restriction of the maximum number of layers of the uplink transmission.

In some embodiments of the present disclosure, when the network device configures the non-codebook-based transmission mode, the number of bits occupied by the first resource indication information is the larger value of the number of bits occupied by the first resource indication information in the STRP scenario and the number of bits occupied by the first resource indication information in the MTRP scenario.

As an example, in the case where the network device configures the non-codebook-based transmission mode, the number of bits occupied by the first resource indication information may be determined according to a formula

$$\max\left( \left\lceil \log_2 \min(L_{\max}, N_{\min}) \right\rceil, \left\lceil \log_2 \left( \sum_{k=1}^{\min\{L_{\max},N_{\min}\}} \binom{N_1}{k} \right) \right\rceil \right),$$

where max represents taking the maximum value.

As another example, in the case where the network device configures the non-codebook-based transmission mode, the number of bits occupied by the first resource indication information may be determined according to a formula

$$\max\left( \left\lceil \log_2 \min(L_{\max}, N_{\min}) \right\rceil, \left\lceil \log_2 \left( \sum_{k=1}^{\min\{L_{\max},N_{\min}\}} \binom{N_1}{k} \right) \right\rceil \right),$$

where max represents taking the maximum value.

In some embodiments of the present disclosure, in the STRP scenario, since the first resource indication information has indicated the layer information corresponding to the uplink transmission, the second resource indication information may only indicate the target SRS resource based on this layer information.

For example, if the first resource indication information indicates that the number of layers is 2, the second resource indication information may indicate one of the six SRS resource combinations with the number of layers being 2.

Alternatively, when the SRS resource under the layer information indicated by the first resource indication information is indicated by the second resource indication information, it is necessary to consider the number of layers corresponding to the maximum number of SRS resource combinations, or in other words, the maximum number of SRS resource combinations in the case of the same number of SRS resources.

Taking Table 1 as an example, when the maximum number of layers of the uplink transmission is 4, 2 SRS resources correspond to the maximum number of SRS resource combinations, i.e., 6 resource combinations. Therefore, the second resource indication information is of at least 3 bits.

Since the target SRS resources corresponding to the uplink transmission in the two SRS resource sets are indicated by the same resource indication information, it is necessary to consider the corresponding maximum number of SRS resource combinations in the case of same number of SRS resources in the two SRS resource sets.

For example, in the case where the maximum number of layers for the uplink transmission is 2, the first SRS resource set includes 4 SRS resources, 2 SRS resources of which correspond to the maximum of SRS resource combinations, i.e., 6 resource combinations; and the second SRS resource set includes 3 SRS resources, 1 SRS resource and 2 SRS resources of which each correspond to 3 resource combinations. Therefore, in the case of the same number of SRS resources, the maximum number of SRS resource combinations in the first SRS resource set is 6 resource combinations. Thus, it may be determined based on the at least six resource combinations that the number of bits of the second resource indication information needs at least 3 bits.

In some embodiments of the present disclosure, in the STRP scenario, the number of bits occupied by the second resource indication information is determined according to at least one of:

the transmission mode configured by the network device;

$N_{Cmax}$ being the larger value of $N_{C1}$ and $N_{C2}$, where $N_{C1}$ represents a maximum number of SRS resource combinations corresponding to the same number of SRS resources in the first SRS resource set for the maximum number of layers of the uplink transmission, and $N_{C2}$ represents the maximum number of SRS resource combinations corresponding to the same number of SRS resources in the second SRS resource set for the maximum number of layers of the uplink transmission.

In some embodiments, in the STRP scenario, in the case where the network device configures the non-codebook-based transmission mode, the number of bits occupied by the second resource indication information is determined according to the formula $\lceil \log_2 N_{Cmax}) \rceil$.

In some embodiments of the present disclosure, in the MTRP scenario, the number of bits occupied by the second resource indication information is determined according to at least one of:

the transmission mode configured by the network device; or

the total number of SRS resource combinations corresponding to respective numbers of layers of the uplink transmission in the second SRS resource set.

In some embodiments, the total number of SRS resource combinations corresponding to respective numbers of layers of the uplink transmission in the second SRS resource set is determined according to the formula

$$\sum_{k=1}^{\min\{L_{\max}, N_{\min}\}} \binom{N_2}{k}$$

. It should be understood that the approach of determining the total number of SRS resource combinations corresponding to respective numbers of layers of the uplink transmission in the second SRS resource set is similar with the approach of determining the total number of SRS resource combinations corresponding to respective numbers of layers of the uplink transmission in the first SRS resource set, and details thereof will not be repeated here for the sake of brevity.

Further, in the MTRP scenario, in the case where the network device configures the non-codebook-based transmission mode, the number of bits occupied by the second resource indication information is determined according to

the formula $\left\lceil \log_2 \left( \sum_{k=1}^{\min\{L_{\max}, N_{\min}\}} \binom{N_2}{k} \right) \right\rceil$.

The approach of determining the number of bits occupied by the second resource indication information in the MTRP scenario is similar with the approach of determining the number of bits occupied by the first resource indication information in the MTRP scenario, and details thereof will not be repeated here for the sake of brevity.

In some embodiments, in the case where the network device configures the non-codebook-based transmission mode, the number of bits occupied by the second resource indication information may be determined based on the larger value of the number of bits occupied by the second resource indication information in the STRP scenario and the number of bits occupied by the second resource indication information in the MTRP scenario, e.g., according to the formula

$$\max\left(\lceil\log_2 N_{C\max})\rceil,\left\lceil\log_2\left(\sum_{k=1}^{\min\{L_{\max},N_{\min}\}}\binom{N_2}{k}\right)\right\rceil\right),$$

where max represents taking the maximum value.

In some other embodiments, in the MTRP scenario, since the first resource indication information has indicated the layer information, only the resource information may be indicated in the second resource indication information. In this way, the number of bits occupied by the second resource indication information may be determined according to the maximum number of SRS resource combinations in the second SRS resource set in the case of the same number of SRS resources. Taking Table 1 as an example, the second SRS resource set includes 4 SRS resources. If the number of layers is 4, the second resource indication information needs to indicate 15 SRS resource combinations. Alternatively, the second resource indication information may only indicate the corresponding maximum number of SRS resource combinations in the case of the same number of resources, i.e., 6 resource combinations. As such, the second resource indication information may be of 4 bits or 3 bits.

As an example, if the numbers of SRS resources in the first SRS resource set and the second SRS resource set are equal to 2, the maximum number of layers supported by the terminal device is 4.

For the first resource indication information, in the STRP scenario, the maximum number of layers of the uplink transmission may be 2, and 1 bit may be used to indicate 2 layers. For the MTRP scenario, the maximum number of layers of the uplink transmission is 2. For the first SRS resource set, at most 3 SRS resource combinations need to be indicated, and at least 2 bits are required. Therefore, it may be determined that the first resource indication information is of 2 bits.

For the first resource indication information, in the STRP scenario, the maximum number of layers of uplink transmission may be 2, i.e., $N_{C\max}$ is 2, and 1 bit may be used to indicate 2 layers. For the MTRP scenario, the maximum number of layers of the uplink transmission is 2. For the second SRS resource set, at most 3 SRS resource combinations need to be indicated, and at least 2 bits are required. Therefore, it may be determined that the second resource indication information is of 2 bits.

As another example, if the first SRS resource set includes 2 SRS resources, and the second SRS resource set includes 4 SRS resources, the maximum number of layers supported by the terminal device is 4.

For the first resource indication information, in the STRP scenario, the maximum number of layers of the uplink transmission may be 2 or 4. Taking the maximum number of layers of the uplink transmission being 2 as an example, the first SRI resource indication information may indicate 2 layers by 1 bit. For the MTRP scenario, the maximum number of layers of the uplink transmission is 2. For the first SRS resource set, at most 3 SRS resource combinations need to be indicated, and at least 2 bits are required. Therefore, it may be determined that the first resource indication information is of 2 bits.

For the second resource indication information, in the STRP scenario, the maximum number of layers of the uplink transmission may be 2 or 4. Taking the maximum number of layers of the uplink transmission being 2 as an example, $N_{C\max}$ is 2, and the second SRI resource indication information may be indicated by 1 bit. For the MTRP scenario, the maximum number of layers of the uplink transmission is 2. For the second SRS resource set, at most 3 SRS resource combinations need to be indicated, and at least 2 bits are required. Therefore, it may be determined that the second resource indication information is of 2 bits.

Embodiment 4: In an STRP scenario, layer information of the uplink transmission and a target SRS resource corresponding to the uplink transmission in a target SRS resource set are determined by the same resource indication information.

Embodiment 4 may be applied to the non-codebook-based uplink transmission.

For example, in the STRP scenario, the first resource indication information is used to determine the layer information of the uplink transmission and the target SRS resource corresponding to the uplink transmission in the target SRS resource set.

Alternatively, in an MTRP scenario, the first resource indication information corresponds to the first SRS resource set, and the second resource indication information corresponds to the second SRS resource set; and the first resource indication information is used to determine the layer information of the uplink transmission and the target SRS resource of the uplink transmission in the first SRS resource set, and the second resource indication information is used to determine the layer information of the uplink transmission and the target SRS resource of the uplink transmission in the second SRS resource set.

Alternatively, in the MTRP scenario, the first resource indication information corresponds to the first SRS resource set, and the second resource indication information corresponds to a second SRS resource set; and the first resource indication information is used to determine the layer information of the uplink transmission and the target SRS resource of the uplink transmission in the first SRS resource set, and the second resource indication information is used to determine the target SRS resource of the uplink transmission in the second SRS resource set.

That is to say, in the MTRP scenario, the first resource indication information may indicate the layer information of the uplink transmission and the target SRS resource information of the uplink transmission in the first SRS resource set, and the second resource indication information may indicate the layer information of the uplink transmission and the target SRS resource information of the uplink transmission in the second SRS resource set. Alternatively, the first resource indication information may indicate the layer information of the uplink transmission and the target SRS resource information of the uplink transmission in the first SRS resource set, and the second resource indication information may indicate the target SRS resource information of the uplink transmission in the second SRS resource set, that is, the second resource indication information may only indicate the resource combination, but does not indicate the layer information of the uplink transmission.

Alternatively, in Embodiment 4, S420 may include:

if the target SRS resource set corresponding to the uplink transmission is the first SRS resource set, determining the layer information of the uplink transmission and the target SRS resource of the uplink transmission in the first SRS resource set according to the first resource indication information; or
if the target SRS resource set corresponding to the uplink transmission is the second SRS resource set, determining the layer information of the uplink transmission and the target SRS resource of the uplink transmission in the second SRS resource set according to the first resource indication information.

That is, in the STRP scenario, no matter which of SRS resource sets is the target SRS resource set, the terminal device determines the layer information of the uplink transmission and the target SRS resource of the uplink transmission in the target SRS resource set always according to the first resource indication information.

Alternatively, in the non-codebook-based transmission mode, the maximum number of layers of the uplink transmission cannot exceed the maximum number $L_{max}$ of layers supported by the terminal device, and cannot exceed the number of ports included in the SRS resource set, or in other words, cannot exceed the maximum configurable number of layers for the SRS resource set.

For example, for the non-codebook-based transmission mode, in the MTRP scenario, the maximum number $L_{max}$ of layers of the uplink transmission cannot exceed the maximum number of layers supported by the terminal device, and cannot exceed the smaller value of the number of ports (or in other words, the number of SRS resources) included in the first SRS resource set and the number of ports included in the second SRS resource set.

As an example, for the MTRP scenario, the maximum number of layers of the uplink transmission may be determined according to a formula $\min(L_{max}, N_{min})$, where $N_{min}$ represents the smaller value of the number $N_1$ of SRS resources included in the first SRS resource set and the number $N_2$ of SRS resources included in the second SRS resource set.

For example, for the non-codebook-based transmission mode, in the STRP scenario, the maximum number of layers of the uplink transmission cannot exceed the maximum number $L_{max}$ of layers supported by the terminal device, and cannot exceed the smaller value of the number of ports included in the first SRS resource set and the number of ports included in the second SRS resource set, or cannot exceed the number of ports included in the target SRS resource set.

As an example, for the STRP scenario, the maximum number of layers of the uplink transmission may be determined according to the formula $\min(L_{max}, N_{min})$, where $N_{min}$ represents the smaller value of the number $N_1$ of SRS resources included in the first SRS resource set and the number $N_2$ of SRS resources included in the second SRS resource set.

As another example, for the STRP scenario, the maximum number of layers of the uplink transmission may be determined according to the formula $\min(L_{max}, N_o)$, where $N_o$ represents the number of SRS resources included in the target SRS resource set.

The way of how to indicate the target SRS resource of the uplink transmission is described above, and the number of bits required for the above-mentioned content indicated by the first resource indication information and the second resource indication information will be described hereinafter.

It should be understood that in the embodiments of the present disclosure, since the DCI needs to support dynamic switching between the STRP and the MSTR, a larger number of bits occupied by the resource indication information is taken in consideration of those two scenarios of STRP and MTRP, when the resource indication information is designed.

In some embodiments of the present disclosure, in the STRP scenario, the number of bits occupied by the first resource indication information is determined according to at least one of:

the transmission mode configured by the network device;

the maximum number $L_{max}$ of layers supported by the terminal device;

the number $N_1$ of SRS resources included in the first SRS resource set; or

the number $N_2$ of SRS resources included in the second SRS resource set.

In this Embodiment 4, since the layer information of the uplink transmission and the target SRS resources in different target SRS resource sets are indicated by the same resource indication information, it is necessary to consider the number of bits occupied by the layer information and the resource information in the SRS resource set that includes a larger number of SRS resources.

In some embodiments of the present disclosure, in the STRP scenario, the number of bits occupied by the first resource indication information is determined according to the larger value of the total number of SRS resource combinations corresponding to respective numbers of layers of the uplink transmission in the first SRS resource set and the total number of SRS resource combinations corresponding to respective numbers of layers of the uplink transmission in the second SRS resource set.

As an example, in the STRP scenario, in the case where the network device configures the non-codebook-based transmission mode, the number of bits occupied by the first resource indication information is determined according to a formula

$$\left\lceil \log_2 \left( \sum_{k=1}^{\min\{L_{max},N_{min}\}} \binom{N_{max}}{k} \right) \right\rceil,$$

where $\displaystyle\sum_{k=1}^{\min\{L_{max},N_{min}\}} \binom{N_{max}}{k}$ represents the larger value of the total number of SRS resource combinations corresponding to respective numbers of layers of the uplink transmission in the first SRS resource set and the total number of SRS resource combinations corresponding to respective numbers of layers of the uplink transmission in the second SRS resource set, and $N_{max}$ represents the larger value of the number $N_1$ of SRS resources included in the first SRS resource set and the number $N_2$ of SRS resources included in the second SRS resource set.

In some embodiments of the present disclosure, in the MTRP scenario, the number of bits occupied by the first resource indication information is determined according to at least one of:

the transmission mode configured by the network device; or

the total number of SRS resource combinations corresponding to respective numbers of layers of the uplink transmission in the first SRS resource set.

In some embodiments, the total number of SRS resource combinations corresponding to respective numbers of layers of the uplink transmission in the first SRS resource set is determined according to the formula $\displaystyle\sum_{k=1}^{\min\{L_{max},N_{min}\}} \binom{N_1}{k}$.

Further, in the MTRP scenario, in the case where the network device configures the non-codebook-based transmission mode, the number of bits occupied by the first resource indication information is determined according to a formula $\left\lceil \log_2 \left( \sum_{k=1}^{\min\{L_{max},N_{min}\}} \binom{N_1}{k} \right) \right\rceil$.

In some embodiments of the present disclosure, in the case where the network device configures the non-codebook-based transmission mode, the number of bits occupied by the first resource indication information is determined according to the larger value of the number of bits occupied by the first resource indication information in the STRP scenario and the number of bits occupied by the first resource indication information in the MTRP scenario, e.g., the number of bits occupied by the first resource indication information is determined according to a formula:

$$\max\left(\left\lceil \log_2\left(\sum_{k=1}^{\min\{L_{\max},N_{\min}\}}\binom{N_{\max}}{k}\right)\right\rceil,\left\lceil \log_2\left(\sum_{k=1}^{\min\{L_{\max},N_{\min}\}}\binom{N_1}{k}\right)\right\rceil\right),$$

where max represents taking the maximum value.

In Embodiment 4, in the STRP scenario, the target SRS resource is not indicated by the second resource indication information. Therefore, the target number of bits of the second resource indication information may be determined according to the number of bits occupied by the second resource indication information in the MTRP scenario. In the MTRP scenario, the second resource indication information only indicates the target SRS resource in the second SRS resource set. Therefore, the second resource indication information is related to the number of SRS resources in the second SRS resource set.

In some embodiments of the present disclosure, the number of bits occupied by the second resource indication information is determined according to at least one of:

the transmission mode configured by the network device; or
the total number of SRS resource combinations corresponding to respective numbers of layers of the uplink transmission in the second SRS resource set.

In some embodiments, the total number of SRS resource combinations corresponding to respective numbers of layers of the uplink transmission in the second SRS resource set is determined according to a formula

$$\sum_{k=1}^{\min\{L_{\max},N_{\min}\}}\binom{N_2}{k}.$$

Further, in the case where the network device configures the non-codebook-based transmission mode, the number of bits occupied by the second resource indication information is determined according to a formula

$$\left\lceil \log_2\left(\sum_{k=1}^{\min\{L_{\max},N_{\min}\}}\binom{N_2}{k}\right)\right\rceil.$$

**In** some other embodiments, in the MTRP scenario, since the first resource indication information has indicated the layer information, only the resource information may be indicated in the second resource indication information. In this way, the number of bits occupied by the second resource indication information may be determined according to the maximum number of SRS resource combinations in the second SRS resource set in the case of the same number of SRS resources. Taking Table 1 as an example, the second SRS resource set includes 4 SRS resources. If the number of layers is 4, the second resource indication information needs to indicate 15 SRS resource combinations. Alternatively, the second resource indication information may only indicate the corresponding maximum number of SRS resource combinations in the case of the same number of resources, i.e., 6 resource combinations. As such, the second resource indication information may be of 4 bits or 3 bits.

As an example, if the numbers of SRS resources in the first SRS resource set and the second SRS resource set are equal to 2, the maximum number of layers supported by the terminal device is 4.

For the first resource indication information, in the STRP scenario, the maximum number of layers of the uplink transmission is 2, and at most 3 SRS resource combinations need to be indicated. Thus, at least 2 bits are needed. For the MTRP scenario, the maximum number of layers of the uplink transmission is 2, and for the first SRS resource set, at most 3 SRS resource combinations need to be indicated, and then the first resource indication information needs at least 2 bits. Thus, it may be determined that the first resource indication information is of 2 bits.

In the STRP scenario, the first resource indication information does not need to be parsed. For the MTRP scenario, the maximum number of layers of the uplink transmission is 2. For the second SRS resource set, at most 3 SRS resource combinations need to be indicated, and then the second resource indication information needs at least 2 bits. Thus, it may be determined that the first resource indication information is of 2 bits.

As another example, if the first SRS resource set includes 2 SRS resources, and the second SRS resource set includes 4 SRS resources, the maximum number of layers supported by the terminal device is 4.

For the first resource indication information, in the STRP scenario, the maximum number of layers of the uplink transmission is 2 or 4. Taking the maximum number of layers of the uplink transmission being 4 as an example, when the number of bits of the first resource indication information is determined in the STRP scenario, it is necessary to consider the SRS resource set including the larger number of resources, i.e., the second SRS resource set, and at most 15 SRS resource combinations need to be indicated, and thus at least 4 bits need to be used. For the MTRP scenario, the maximum number of layers of the uplink transmission is 2. For the first SRS resource set, at most 3 SRS resource combinations need to be indicated, and then the first resource indication information needs at least 4 bits.

In the STRP scenario, the second resource indication information does not need to be parsed. For the MTRP scenario, the maximum number of layers of the uplink transmission is 2. For the second SRS resource set, at most 10 SRS resource combinations need to be indicated, and then the second resource indication information needs at least 4 bits.

Embodiment 5: In an STRP scenario, different SRS resource sets correspond to respective resource indication information, and the resource indication information corresponding to the SRS resource set indicates layer information of the uplink transmission and a target SRS resource of the uplink transmission in the SRS resource set.

Embodiment 5 may be applied to the non-codebook-based uplink transmission.

As an example, the first resource indication information corresponds to the first SRS resource set, and the second resource indication information corresponds to the second SRS resource set; and the first resource indication information is used to determine the layer information of the uplink transmission and the target SRS resource corresponding to the uplink transmission in the first SRS resource set, and the second resource indication information is used to determine the layer information of the uplink transmission and the target SRS resource corresponding to the uplink transmission in the second SRS resource set.

As another example, the first resource indication information corresponds to the first SRS resource set, and the second resource indication information corresponds to the second SRS resource set; and the first resource indication information is used to determine the layer information of the uplink transmission and the target SRS resource corresponding to the uplink transmission in the first SRS resource set, and the second resource indication information is used to determine the target SRS resource corresponding to the uplink transmission in the second SRS resource set.

For example, in a case where the maximum number of layers of the uplink transmission is determined using the aforementioned Approach 1, the second resource indication information may only indicate the information of the target SRS resource, but does not indicate the layer information of the uplink transmission. In this case, it may be considered that the layer information corresponding to the uplink transmission in different SRS resource sets is the same.

Alternatively, in an MTRP scenario, the first resource indication information corresponds to the first SRS resource set, and the second resource indication information corresponds to the second SRS resource set; and the first resource indication information is used to determine the layer information of the uplink transmission and the target SRS resource of the uplink transmission in the first SRS resource set, and the second resource indication information is used to determine the layer information of the uplink transmission and the target SRS resource of the uplink transmission in the second SRS resource set.

Alternatively, in the MTRP scenario, the first resource indication information corresponds to the first SRS resource set, and the second resource indication information corresponds to a second SRS resource set; and the first resource indication information is used to determine the layer information of the uplink transmission and the target SRS resource of the uplink transmission in the first SRS resource set, and the second resource indication information is used to determine the target SRS resource of the uplink transmission in the second SRS resource set.

That is to say, in the MTRP scenario, the first resource indication information may indicate the layer information of the uplink transmission and the target SRS resource information of the uplink transmission in the first SRS resource set, and the second resource indication information may indicate the layer information of the uplink transmission and the target SRS resource information of the uplink transmission in the second SRS resource set. Alternatively, the first resource indication information may indicate the layer information of the uplink transmission and the target SRS resource information of the uplink transmission in the first SRS resource set, and the second resource indication information may indicate the target SRS resource information of the uplink transmission in the second SRS resource set, that is, the second resource indication information may only indicate the resource combination, but does not indicate the layer information of the uplink transmission.

Alternatively, in Embodiment 5, S420 may include:

if the target SRS resource set corresponding to the uplink transmission is the first SRS resource set, determining the layer information of the uplink transmission and the target SRS resource of the uplink transmission in the first SRS resource set according to the first resource indication information; or
if the target SRS resource set corresponding to the uplink transmission is the second SRS resource set, determining the layer information of the uplink transmission and the target SRS resource of the uplink transmission in the second SRS resource set according to the second resource indication information.

Alternatively, in Embodiment 5, S420 may include:

if the target SRS resource set corresponding to the uplink transmission is the first SRS resource set, determining the layer information of the uplink transmission and the target SRS resource of the uplink transmission in the first SRS resource set according to the first resource indication information; or

if the target SRS resource set corresponding to the uplink transmission is the second SRS resource set, determining the layer information of the uplink transmission according to the first resource indication information, and determining the target SRS resource of the uplink transmission in the second SRS resource set according to the second resource indication information.

Alternatively, in the non-codebook-based transmission mode, the maximum number of layers of the uplink transmission cannot exceed the maximum number $L_{max}$ of layers supported by the terminal device, and cannot exceed the number of ports included in the SRS resource set, or in other words, cannot exceed the maximum configurable number of layers for the SRS resource set.

For example, for the non-codebook-based transmission mode, in the MTRP scenario, the maximum number $L_{max}$ of layers of the uplink transmission cannot exceed the maximum number of layers supported by the terminal device, and cannot exceed the smaller value of the number of ports (or in other words, the number of SRS resources) included in the first SRS resource set and the number of ports included in the second SRS resource set.

As an example, for the MTRP scenario, the maximum number of layers of the uplink transmission may be determined according to a formula $min(L_{max}, N_{min})$, where $N_{min}$ represents the smaller value of the number $N_1$ of SRS resources included in the first SRS resource set and the number $N_2$ of SRS resources included in the second SRS resource set.

For example, for the non-codebook-based transmission mode, in the STRP scenario, the maximum number of layers of the uplink transmission cannot exceed the maximum number $L_{max}$ of layers supported by the terminal device, and cannot exceed the smaller value of the number of ports included in the first SRS resource set and the number of ports included in the second SRS resource set, or cannot exceed the number of ports included in the target SRS resource set.

Approach 1: for the STRP scenario, the maximum number of layers of the uplink transmission may be determined according to the formula $min(L_{max}, N_{min})$, where $N_{min}$ represents the smaller value of the number $N_1$ of SRS resources included in the first SRS resource set and the number $N_2$ of SRS resources included in the second SRS resource set.

Approach 2: for the STRP scenario, the maximum number of layers of the uplink transmission may be determined according to the formula $min(L_{max}, N_o)$, where $N_o$ represents the number of SRS resources included in the target SRS resource set.

The way of how to indicate the target SRS resource of the uplink transmission is described above, and the number of bits required for the above-mentioned content indicated by the first resource indication information and the second resource indication information will be described hereinafter.

It should be understood that in the embodiments of the present disclosure, since the DCI needs to support dynamic switching between the STRP and the MSTR, a larger number of bits occupied by the resource indication information is taken in consideration of those two scenarios of STRP and MTRP, when the resource indication information is designed.

In this Embodiment 5, since the layer information of the uplink transmission and the target SRS resource in the corresponding target SRS resource set are indicated by different resource indication information, it is necessary to consider, for each resource indication information, the number of bits occupied by the layer information and the resource information in the corresponding SRS resource set.

As an example, if the first SRS resource set includes 2 SRS resources, and the second SRS resource set includes 4 SRS resources, the maximum number of layers supported by the terminal device is 4.

For example, if the maximum number of layers of the uplink transmission is determined based on the above Approach 1, the maximum configurable number of layers is 2 for the first SRS resource set, and the maximum configurable number of layers for the second SRS resource set is 2. If the maximum number of layers of the uplink transmission is determined based on the above Approach 2, the maximum configurable number of layers for the first SRS resource set is 2, and the maximum configurable number of layers for the second SRS resource set is 4.

In some embodiments of the present disclosure, in the STRP scenario, the number of bits occupied by the first resource indication information is determined according to at least one of:

a transmission mode configured by the network device; or
a total number of SRS resource combinations corresponding to respective numbers of layers of the uplink transmission in the first SRS resource set.

In some embodiments, the total number of SRS resource combinations corresponding to respective numbers of layers of the uplink transmission in the first SRS resource set may be determined according to a formula

$$\sum_{k=1}^{\min\{L_{\max},N_{\min}\}} \binom{N_1}{k}$$ . For example, when the maximum number of layers of the uplink transmission is determined using the above Approach 1, the total number of SRS resource combinations corresponding to respective numbers of layers of uplink transmission in the first SRS resource set is determined according to $$\sum_{k=1}^{\min\{L_{\max},N_{\min}\}} \binom{N_1}{k}$$ .

In some other embodiments, the total number of SRS resource combinations corresponding to respective numbers of layers of the uplink transmission in the first SRS resource set may be determined according to a formula $$\sum_{k=1}^{\min\{L_{\max},N_1\}} \binom{N_1}{k}$$ . For example, when the maximum number of layers of uplink transmission is determined using the above Approach 2, the total number of SRS resource combinations corresponding to respective numbers of layers of uplink transmission in the first SRS resource set is determined according to $$\sum_{k=1}^{\min\{L_{\max},N_1\}} \binom{N_1}{k}$$ .

Further, in the STRP scenario, when the network device configures the non-codebook-based transmission mode, the number of bits occupied by the first resource indication information is determined according to a formula

$$\left\lceil \log_2\left(\sum_{k=1}^{\min\{L_{\max},N_{\min}\}} \binom{N_1}{k}\right)\right\rceil \ \text{or} \ \left\lceil \log_2\left(\sum_{k=1}^{\min\{L_{\max},N_1\}} \binom{N_1}{k}\right)\right\rceil .$$

In some embodiments of the present disclosure, in the MTRP scenario, the number of bits occupied by the first resource indication information may be determined according to $$\left\lceil \log_2\left(\sum_{k=1}^{\min\{L_{\max},N_{\min}\}} \binom{N_1}{k}\right)\right\rceil .$$

In some embodiments, in the STRP scenario, the number of bits occupied by the second resource indication information is determined according to at least one of:

the transmission mode configured by the network device; or
the total number of SRS resource combinations corresponding to respective numbers of layers of the uplink transmission in the second SRS resource set.

In some embodiments, in the STRP scenario, the total number of SRS resource combinations corresponding to respective numbers of layers of the uplink transmission in the second SRS resource set may be determined according to a formula $$\sum_{k=1}^{\min\{L_{\max},N_{\min}\}} \binom{N_2}{k}$$ . For example, when the maximum number of layers of uplink transmission is determined using the above Approach 1, the total number of SRS resource combinations corresponding to respective numbers of layers of the uplink transmission in the second SRS resource set is determined according to the formula $$\sum_{k=1}^{\min\{L_{\max},N_{\min}\}} \binom{N_2}{k}$$ .

In some other embodiments, in the STRP scenario, the total number of SRS resource combinations corresponding to respective numbers of layers of the uplink transmission in the second SRS resource set may be determined according to a formula $$\sum_{k=1}^{\min\{L_{\max},N_2\}} \binom{N_2}{k}$$ . For example, when the maximum number of layers of uplink transmission is determined using the above Approach 2, the total number of SRS resource combinations corresponding to respective numbers of layers of the uplink transmission in the second SRS resource set is determined according to the formula

$$\sum_{k=1}^{\min\{L_{\max},N_2\}}\binom{N_2}{k}.$$

In some embodiments, the number of bits occupied by the second resource indication information is determined

according to $\left\lceil \log_2\left(\sum_{k=1}^{\min\{L_{\max},N_{\min}\}}\binom{N_2}{k}\right)\right\rceil$ or $\left\lceil \log_2\left(\sum_{k=1}^{\min\{L_{\max},N_2\}}\binom{N_2}{k}\right)\right\rceil.$

In some embodiments of the present disclosure, in the MTRP scenario, the number of bits occupied by the second resource indication information may be determined according to a formula $\left\lceil \log_2\left(\sum_{k=1}^{\min\{L_{\max},N_{\min}\}}\binom{N_2}{k}\right)\right\rceil.$

Taking Table 1 as an example, the second SRS resource set includes 4 SRS resources. If the number of layers of the uplink transmission is 4, the second resource indication information needs to indicate 15 SRS resource combinations, and thus the second resource indication information may be of 4 bits.

**In** some other embodiments, in some scenarios, since the first resource indication information has indicated the layer information, only the resource information may be indicated in the second resource indication information. In this way, the number of bits occupied by the second resource indication information may be determined according to the maximum number of SRS resource combinations in the second SRS resource set in the case of the same number of SRS resources.

As an example, the second resource indication information may be determined according to $\left\lceil \log_2 N_{C2})\right\rceil$, where $N_{C2}$ represents the maximum number of SRS resource combinations corresponding to the same number of SRS resources in the second SRS resource set for the maximum number of layers of the uplink transmission.

Taking Table 1 as an example, the second SRS resource set includes 4 SRS resources. If the first resource indication information indicates that the maximum number of layers of the uplink transmission is 4, the second resource indication information may only indicate the maximum number of SRS resource combinations in the case of the same number of resources, i.e., 6 resource combinations, and the second resource indication information may be thus of 3 bits.

As an example, if the numbers of SRS resources in the first SRS resource set and the second SRS resource set are equal to 2, the maximum number of layers supported by the terminal device is 4.

For the first SRS resource set, in the STRP scenario, the maximum number of layers of the uplink transmission is 2, at most 3 SRS resource combinations need to be indicated, and thus the first resource indication information needs at least 2 bits. In the MTRP scenario, the maximum number of layers of the uplink transmission is 2, and at most 3 SRS resource combinations need to be indicated, and thus the first resource indication information needs at least 2 bits. Thus, it may be determined that the first resource indication information is of 2 bits.

For the second SRS resource set, in the STRP scenario, the maximum number of layers of the uplink transmission is 2, at most 3 SRS resource combinations need to be indicated, and thus the second resource indication information needs at least 2 bits. In the MTRP scenario, the maximum number of layers of the uplink transmission is 2, and at most 3 SRS resource combinations need to be indicated, and thus the second resource indication needs at least 2 bits. Thus, it may be determined that the second resource indication information is of 2 bits. Alternatively, since the first resource indication information has indicated the layer information, the second resource indication information may only indicate the resource information. In this case, in the STRP scenario, the second resource indication information only needs to indicate at most two SRS resource combinations, and the second resource indication information may thus be of 1 bit. Similarly, in the MTRP scenario, the second resource indication information may also be of 1 bit. Thus, the target number of bits of the second resource indication information may be 1.

As yet another example, if the first SRS resource set includes 2 SRS resources, and the second SRS resource set includes 4 SRS resources, the maximum number of layers supported by the terminal device is 4.

For the first SRS resource set, in the STRP scenario, the maximum number of layers of the uplink transmission is 2, at most 3 SRS resource combinations need to be indicated, and thus the first resource indication information needs at least 2 bits. In the MTRP scenario, the maximum number of layers of the uplink transmission is 2, and at most 3 SRS resource combinations need to be indicated, and thus the first resource indication needs at least 2 bits. Thus, it may be determined that the first resource indication information is of 2 bits.

For the second SRS resource set, in the STRP scenario, the maximum number of layers of the uplink transmission is 2 or 4. Taking the maximum number of layers of the uplink transmission being 4 as an example, at most 3 SRS resource combinations need to be indicated, and thus the second resource indication information needs at least 2 bits. In the MTRP scenario, the maximum number of layers of the uplink transmission is 2, and at most 3 SRS resource combinations need to be indicated, and thus the second resource indication needs at least 2 bits. Thus, it may be determined that the second resource indication information is of 2 bits. Alternatively, since the first resource indication information has indicated the layer information, the second resource indication information may only indicate the resource information. In this case, in the STRP scenario, the second resource indication information only needs to indicate at most two SRS resource combinations, and the second resource indication information may thus be of 1 bit. Similarly, in the MTRP scenario, the second resource indication information may also be of 1 bit. Thus, the target number of bits of the second resource indication information may be 1.

In summary, when the network device schedules the uplink transmission, the target SRS resource set of the uplink transmission and the target SRS resource corresponding to the uplink transmission in the target SRS resource set may be indicated by the DCI for scheduling the uplink transmission, so that regardless of the STRP or MTRP-based uplink transmission, the terminal device may acquire the target SRS resource for the uplink transmission by parsing the corresponding information in the DCI, which may guarantee consistent understanding of the terminal device and the network device on the target SRS resource of the uplink transmission, and thus guarantee reliability of the uplink transmission.

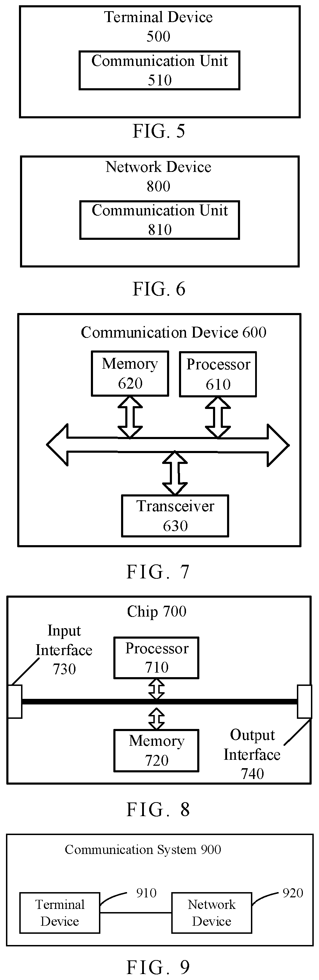

The method embodiments of the present disclosure are described previously in detail in conjunction with FIG. 4. Hereinafter, the device embodiments of the present disclosure will be described in detail in conjunction with FIGS. 5 to 9. It should be understood that the device embodiments and the method embodiments correspond to each other, and similar descriptions thereof may refer to the method embodiments.

FIG. 5 is a schematic block diagram of a terminal device 500 according to an embodiment of the present disclosure. As shown in FIG. 5, the terminal device 500 includes:

a communication unit configured to: receive Downlink Control Information (DCI) transmitted by a network device, the DCI being used to schedule the terminal device to transmit an uplink transmission, and the DCI including first indication information and second indication information.

The first indication information indicates a target Sounding Reference Signal (SRS) resource set corresponding to the uplink transmission, the target SRS resource set including at least one of a first SRS resource set and a second SRS resource set.

The second indication information is used to determine the target SRS resource corresponding to the uplink transmission in the target SRS resource set.

In some embodiments of the present disclosure, a number of SRS resource sets in the target SRS resource set indicates that a target Transmission Receive Point (TRP) of the uplink transmission is the STRP or the MTRP.

In the present disclosure, the second indication information includes first resource indication information and second resource indication information. In a case where the target SRS resource set includes one SRS resource set, the first resource indication information is used to determine the target SRS resource in the target SRS resource set.

In the present disclosure, the terminal device includes:

a processing unit configured to, in a case where the target SRS resource set includes the first SRS resource set or the second SRS resource set, the first resource indication information is used to determine the target SRS resource in the target SRS resource set.

In some embodiments of the present disclosure, a number of bits occupied by the first resource indication information is determined according to at least one of:

a transmission mode configured by the network device; or

$N_{max}$, where $N_{max}$, represents a larger value of a number $N_1$ of SRS resources included in the first SRS resource set and a number $N_2$ of SRS resources included in the second SRS resource set.

In some embodiments of the present disclosure, in a case where the network device configures a codebook-based transmission mode, a number of bits occupied by a first SRS Resource Indicator (SRI) field is determined according to a formula $\left\lceil \log_2 N_{max} \right\rceil$.

In the present disclosure, the second indication information includes first resource indication information and second resource indication information, the first resource indication information corresponding to the first SRS resource set, and the second resource indication information corresponding to the second SRS resource set. The first resource indication information is used to determine the target SRS resource in the first SRS resource set, and the second resource indication information is used to determine the target SRS resource in the second SRS resource set.

In some embodiments of the present disclosure, in a case where the network device configures a codebook-based transmission mode, a number of bits occupied by a first SRI field is determined according to a formula $\left\lceil \log_2 N_1 \right\rceil$,

and a number of bits occupied by a second SRI field is determined according to a formula $\left\lceil \log_2 N_2 \right\rceil$.

In some embodiments of the present disclosure, the first SRS resource set and the second SRS resource set are SRS resource sets for codebook transmission.

In some embodiments of the present disclosure, the second indication information includes first resource indication information and second resource indication information, and in a case where the target SRS resource set includes one SRS resource set, the first resource indication information is used to determine layer information of the uplink transmission, and the second resource indication information is used to determine the target SRS resource corresponding to the uplink transmission in the target SRS resource set.

In some embodiments of the present disclosure, the terminal device further includes:

**a** processing unit configured to: in a case where the target SRS resource set corresponding to the uplink transmission is the first SRS resource set or the second SRS resource set, determine layer information of the uplink transmission according to the first resource indication information, and determine the target SRS resource corresponding to the uplink transmission in the target SRS resource set according to the second resource indication information.

In some embodiments of the present disclosure, a number of bits occupied by the first resource indication information is determined according to at least one of:

a transmission mode configured by the network device;
**a** maximum number $L_{max}$ of layers supported by the terminal device;
**a** number $N_1$ of SRS resources included in the first SRS resource set;
**a** number $N_2$ of SRS resources included in the second SRS resource set; or
**a** total number of SRS resource combinations corresponding to respective numbers of layers of the uplink transmission in the first SRS resource set.

In some embodiments of the present disclosure, in a case where the network device configures a non-codebook-based transmission mode, a number of bits occupied by the first resource indication information is determined according to a formula:

$$\max\left(\left\lceil \log_2 \min(L_{max}, N_{max}) \right\rceil, \left\lceil \log_2 \left( \sum_{k=1}^{\min\{L_{max}, N_{min}\}} \binom{N_1}{k} \right) \right\rceil \right);$$

or

$$\max\left(\left\lceil \log_2 \min(L_{max}, N_{min}) \right\rceil, \left\lceil \log_2 \left( \sum_{k=1}^{\min\{L_{max}, N_{min}\}} \binom{N_1}{k} \right) \right\rceil \right),$$

where max represents taking a maximum value, min represents taking a minimum value, $\lceil \ \rceil$ represents rounding up, $N_{max}$ represents a larger value of the number $N_1$ of SRS resources included in the first SRS resource set and the number $N_2$ of SRS resources included in the second SRS resource set, $N_{min}$ represents a smaller value of $N_1$ and $N_2$, and

$$\sum_{k=1}^{\min\{L_{max}, N_{min}\}} \binom{N_1}{k}$$

represents a total number of SRS resource combinations corresponding to respective numbers of layers of the uplink transmission in the first SRS resource set.

In some embodiments of the present disclosure, a number of bits occupied by the second resource indication information is determined according to at least one of:

**a** transmission mode configured by the network device;
$N_{Cmax}$ being a larger value of $N_{C1}$ and $N_{C2}$, where $N_{C1}$ represents a maximum number of SRS resource combinations corresponding to the same number of SRS resources in the first SRS resource set for a maximum number of layers of the uplink transmission, and $N_{C2}$ represents a maximum number of SRS resource combinations corresponding to the same number of SRS resources in the second SRS resource set for a maximum number of layers of uplink transmission; or
a total number of SRS resource combinations corresponding to respective numbers of layers of the uplink transmission in the second SRS resource set.

In some embodiments of the present disclosure, in a case where the network device configures a non-codebook-based transmission mode, a number of bits occupied by the second resource indication information is determined according to a formula:

$$\max\left(\left\lceil \log_2 N_{C\max} \right\rceil, \left\lceil \log_2\left( \sum_{k=1}^{\min\{L_{\max}, N_{\min}\}} \binom{N_2}{k} \right) \right\rceil \right),$$

where max represents taking a maximum value, min represents taking a minimum value, $\lceil \ \rceil$ represents rounding up,

$$\sum_{k=1}^{\min\{L_{\max}, N_{\min}\}} \binom{N_2}{k}$$ represents a total number of SRS resource combinations corresponding to respective numbers of layers of the uplink transmission in the second SRS resource set, and $N_{\min}$ represents a smaller value of the number $N_1$ of SRS resources included in the first SRS resource set and the number $N_2$ of SRS resources included in the second SRS resource set.

In some embodiments of the present disclosure, the second indication information includes first resource indication information and second resource indication information, and in a case where the target SRS resource set includes one SRS resource set, the first resource indication information is used to determine layer information of the uplink transmission and the target SRS resource corresponding to the uplink transmission in the target SRS resource set.

In some embodiments of the present disclosure, the number of bits occupied by the first resource indication information is determined according to at least one of:

a transmission mode configured by the network device;
a maximum number $L_{\max}$ of layers supported by the terminal device;
a number $N_1$ of SRS resources included in the first SRS resource set;
a number $N_2$ of SRS resources included in the second SRS resource set; or
a total number of SRS resource combinations corresponding to respective numbers of layers of the uplink transmission in the first SRS resource set.

In some embodiments of the present disclosure, in a case where the network device configures a non-codebook-based transmission mode, a number of bits occupied by the first resource indication information is determined according to a formula:

$$\max\left(\left\lceil \log_2\left( \sum_{k=1}^{\min\{L_{\max}, N_{\min}\}} \binom{N_{\max}}{k} \right) \right\rceil, \left\lceil \log_2\left( \sum_{k=1}^{\min\{L_{\max}, N_{\min}\}} \binom{N_1}{k} \right) \right\rceil \right),$$

where max represents taking a maximum value, min represents taking a minimum value, $\lceil \ \rceil$ represents rounding up, $N_{\min}$ represents a smaller value of the number $N_1$ of SRS resources included in the first SRS resource set and the number $N_2$ of

SRS resources included in the second SRS resource set, $\sum_{k=1}^{\min\{L_{\max}, N_{\min}\}} \binom{N_{\max}}{k}$ represents a total number of SRS resource combinations corresponding to respective numbers of layers of the uplink transmission in one of the first SRS resource set and the second SRS resource set having a larger number of SRS resources, and $\sum_{k=1}^{\min\{L_{\max}, N_{\min}\}} \binom{N_1}{k}$

represents a total number of SRS resource combinations corresponding to respective numbers of layers of the uplink transmission in the first SRS resource set.

In some embodiments of the present disclosure, the second resource indication information is used to determine layer information of the uplink transmission and the target SRS resource corresponding to the uplink transmission in the second SRS resource set in a case where the target SRS resource set includes the first SRS resource set and the second SRS resource set.

In some embodiments of the present disclosure, in a case where the network device configures a non-codebook-based transmission mode, a number of bits occupied by the second resource indication information is determined according to a formula:

$$\left\lceil \log_2 \left( \sum_{k=1}^{\min\{L_{\max}, N_{\min}\}} \binom{N_2}{k} \right) \right\rceil,$$

where min represents taking a minimum value, $\lceil \, \rceil$ represents rounding up, and $\sum_{k=1}^{\min\{L_{\max}, N_{\min}\}} \binom{N_2}{k}$ represents a total

number of SRS resource combinations corresponding to respective numbers of layers of the uplink transmission in the second SRS resource set.

In some embodiments of the present disclosure, the second indication information includes first resource indication information and second resource indication information, the first resource indication information corresponding to the first SRS resource set, and the second resource indication information corresponding to the second SRS resource set. The first resource indication information is used to determine layer information of the uplink transmission and the target SRS resource corresponding to the uplink transmission in the first SRS resource set, and the second resource indication information is used to determine layer information of the uplink transmission and the target SRS resource corresponding to the uplink transmission in the second SRS resource set.

In some embodiments of the present disclosure, a number of bits occupied by the first resource indication information is determined according to at least one of:

a transmission mode configured by the network device;
a maximum number $L_{\max}$ of layers supported by the terminal device;
a number $N_1$ of SRS resources included in the first SRS resource set;
a number $N_2$ of SRS resources included in the second SRS resource set; or
a total number of SRS resource combinations corresponding to respective numbers of layers of the uplink transmission in the first SRS resource set.

In some embodiments of the present disclosure, in a case where the network device configures a non-codebook-based transmission mode, a number of bits occupied by the first resource indication information is determined according to a formula:

$$\max\left( \left\lceil \log_2 \left( \sum_{k=1}^{\min\{L_{\max}, N_1\}} \binom{N_1}{k} \right) \right\rceil, \left\lceil \log_2 \left( \sum_{k=1}^{\min\{L_{\max}, N_{\min}\}} \binom{N_1}{k} \right) \right\rceil \right),$$

or

$$\left\lceil \log_2 \left( \sum_{k=1}^{\min\{L_{\max}, N_{\min}\}} \binom{N_1}{k} \right) \right\rceil,$$

where max represents taking a maximum value, min represents taking a minimum value, $\lceil \, \rceil$ represents rounding up,

$\sum_{k=1}^{\min\{L_{\max}, N_1\}} \binom{N_1}{k}$ represents a total number of SRS resource combinations corresponding to respective numbers of layers of the uplink transmission in the first SRS resource set in a case where the target SRS resource set includes only the first SRS resource set, $N_{\min}$ represents a smaller value of the number $N_1$ of SRS resources included in the first SRS resource set and the number $N_2$ of SRS resources included in the second SRS resource set, and $\sum_{k=1}^{\min\{L_{\max}, N_{\min}\}} \binom{N_1}{k}$

represents a total number of SRS resource combinations corresponding to respective numbers of layers of the uplink transmission in the first SRS resource set in a case where the target SRS resource set includes the first SRS resource set and the second SRS resource set.

In some embodiments of the present disclosure, a number of bits occupied by the second resource indication information is determined according to at least one of:

**a** transmission mode configured by the network device;
**a** maximum number $L_{max}$ of layers supported by the terminal device;
**a** number $N_2$ of SRS resources included in the second SRS resource set; or
**a** total number of SRS resource combinations corresponding to respective numbers of layers of the uplink transmission in the second SRS resource set.

In some embodiments of the present disclosure, in a case where the network device configures a non-codebook-based transmission mode, a number of bits occupied by the second resource indication information is determined according to a formula:

$$\max\left(\left\lceil \log_2\left(\sum_{k=1}^{\min\{L_{max},N_2\}}\binom{N_2}{k}\right)\right\rceil, \left\lceil \log_2\left(\sum_{k=1}^{\min\{L_{max},N_{min}\}}\binom{N_2}{k}\right)\right\rceil\right),$$

or

$$\left\lceil \log_2\left(\sum_{k=1}^{\min\{L_{max},N_{min}\}}\binom{N_2}{k}\right)\right\rceil,$$

where $\lceil\ \rceil$ represents rounding up, $\sum_{k=1}^{\min\{L_{max},N_2\}}\binom{N_2}{k}$ represents a total number of SRS resource combinations corresponding to respective numbers of layers of the uplink transmission in the second SRS resource set in a case where the target SRS resource set includes only the second SRS resource set, $N_{min}$ represents a smaller value of the number $N_1$ of SRS resources included in the first SRS resource set and the number $N_2$ of SRS resources included in the second SRS resource set, and $\sum_{k=1}^{\min\{L_{max},N_{min}\}}\binom{N_2}{k}$ represents a total number of SRS resource combinations corresponding to respective numbers of layers of the uplink transmission in the second SRS resource set in a case where the target SRS resource set includes the first SRS resource set and the second SRS resource set.

In some embodiments of the present disclosure, the first SRS resource set and the second SRS resource set are SRS resource sets for non-codebook transmission.

In some embodiments of the present disclosure, the first resource indication information is carried in a first SRS resource indicator field or a first Transmission Precoding Matrix Indicator (TPMI) field, and the second resource indication information is carried in a second SRS resource indicator field or a second TPMI indicator field.

In some embodiments of the present disclosure, the first SRS resource indicator field is a first SRS resource indicator field in the DCI, and the second SRS resource indicator field is a second SRS resource indicator field in the DCI.

In some embodiments of the present disclosure, the first indication information and the second indication information are carried in different fields in the DCI.

In some embodiments of the present disclosure, the first indication information is of at least 2 bits.

Alternatively, in some embodiments, the above-mentioned communication unit may be a communication interface or a transceiver, or an input/output interface of a communication chip or a system-on-chip. The above-mentioned processing unit may be one or more processors.

It should be understood that the terminal device 500 according to the embodiments of the present disclosure may correspond to the terminal device in the method embodiments of the present disclosure, and the above-mentioned and other operations and/or functions of each unit in the terminal device 500 are used for implementing the corresponding process performed by the terminal device 400 in the method as shown in FIG. 4, and description thereof will not be repeated here for the sake of brevity.

FIG. 5 is a schematic block diagram of a network device 800 according to an embodiment of the present disclosure. As shown in FIG. 5, the network device 800 includes:
a communication unit 810 configured to: transmit Downlink Control Information (DCI) to a terminal device, the DCI being used to schedule the terminal device to transmit an uplink transmission, and the DCI including first indication information and second indication information.

The first indication information is used to indicate a target Sounding Reference Signal (SRS) resource set corresponding to the uplink transmission, the target SRS resource set including at least one of a first SRS resource set and a second SRS resource set.

The second indication information is used to determine a target SRS resource corresponding to the uplink transmission in the target SRS resource set.

In some embodiments of the present disclosure, a number of SRS resource sets in the target SRS resource set is used to indicate that a target Transmission Receive Point (TRP) of the uplink transmission is the STRP or the MTRP.

In the present disclosure, the second indication information includes first resource indication information and second resource indication information. In a case where the target SRS resource set includes one SRS resource set, the first resource indication information is used to determine the target SRS resource in the target SRS resource set.

In some embodiments of the present disclosure, a number of bits occupied by the first resource indication information is determined according to at least one of:

a transmission mode configured by the network device; or
$N_{max}$, where $N_{max}$ represents a larger value of a number $N_1$ of SRS resources included in the first SRS resource set and a number $N_2$ of SRS resources included in the second SRS resource set.

In some embodiments of the present disclosure, in a case where the network device configures a codebook-based transmission mode, a number of bits occupied by a first SRS Resource Indicator (SRI) field is determined according to a formula $\lceil \log_2 N_{max} \rceil$.

In the present disclosure, the second indication information includes first resource indication information and second resource indication information, the first resource indication information corresponding to the first SRS resource set, and the second resource indication information corresponding to the second SRS resource set. The first resource indication information is used to determine the target SRS resource in the first SRS resource set, and the second resource indication information is used to determine the target SRS resource in the second SRS resource set.

In some embodiments of the present disclosure, in a case where the network device configures a codebook-based transmission mode, a number of bits occupied by a first SRI field is determined according to a formula $\lceil \log_2 N_1 \rceil$, and a number of bits occupied by a second SRI field is determined according to a formula $\lceil \log_2 N_2 \rceil$.

In some embodiments of the present disclosure, the first SRS resource set and the second SRS resource set are SRS resource sets for codebook transmission.

In some embodiments of the present disclosure, the second indication information includes first resource indication information and second resource indication information, and in a case where the target SRS resource set includes one SRS resource set, the first resource indication information is used to determine layer information of the uplink transmission, and the second resource indication information is used to determine target SRS resource corresponding to the uplink transmission in the target SRS resource set.

In some embodiments of the present disclosure, a number of bits occupied by the first resource indication information is determined according to at least one of:

a transmission mode configured by the network device;
a maximum number $L_{max}$ of layers supported by the terminal device;
a number $N_1$ of SRS resources included in the first SRS resource set;
a number $N_2$ of SRS resources included in the second SRS resource set; or
a total number of SRS resource combinations corresponding to respective numbers of layers of the uplink transmission in the first SRS resource set.

In some embodiments of the present disclosure, in a case where the network device configures a non-codebook-based transmission mode, a number of bits occupied by the first resource indication information is determined according to a formula:

$$\max(\lceil \log_2 \min(L_{\max}, N_{\max}) \rceil, \left\lceil \log_2 \left( \sum_{k=1}^{\min\{L_{\max}, N_{\min}\}} \binom{N_1}{k} \right) \right\rceil);$$

or

$$\max(\lceil \log_2 \min(L_{\max}, N_{\min}) \rceil, \left\lceil \log_2 \left( \sum_{k=1}^{\min\{L_{\max}, N_{\min}\}} \binom{N_1}{k} \right) \right\rceil),$$

where max represents taking a maximum value, min represents taking a minimum value, $\lceil \rceil$ represents rounding up, $N_{\max}$ represents a larger value of the number $N_1$ of SRS resources included in the first SRS resource set and the number $N_2$ of SRS resources included in the second SRS resource set, $N_{\min}$ represents a smaller value of $N_1$ and $N_2$, and

$$\sum_{k=1}^{\min\{L_{\max}, N_{\min}\}} \binom{N_1}{k}$$

represents a total number of SRS resource combinations corresponding to respective numbers of layers of the uplink transmission in the first SRS resource set.

In some embodiments of the present disclosure, a number of bits occupied by the second resource indication information is determined according to at least one of:

    **a** transmission mode configured by the network device;

    $N_{C\max}$ being a larger value of $N_{C1}$ and $N_{C2}$, where $N_{C1}$ represents a maximum number of SRS resource combinations corresponding to the same number of SRS resources in the first SRS resource set for a maximum number of layers of the uplink transmission, and $N_{C2}$ represents a maximum number of SRS resource combinations corresponding to the same number of SRS resources in the second SRS resource set for a maximum number of layers of uplink transmission; or

    **a** total number of SRS resource combinations corresponding to respective numbers of layers of the uplink transmission in the second SRS resource set.

In some embodiments of the present disclosure, in a case where the network device configures a non-codebook-based transmission mode, a number of bits occupied by the second resource indication information is determined according to a formula:

$$\max(\lceil \log_2 N_{C\max} \rceil, \left\lceil \log_2 \left( \sum_{k=1}^{\min\{L_{\max}, N_{\min}\}} \binom{N_2}{k} \right) \right\rceil),$$

where max represents taking a maximum value, min represents taking a minimum value, $\lceil \rceil$ represents rounding up,

$$\sum_{k=1}^{\min\{L_{\max}, N_{\min}\}} \binom{N_2}{k}$$

represents a total number of SRS resource combinations corresponding to respective numbers of layers of the uplink transmission in the second SRS resource set, and $N_{\min}$ represents a smaller value of the number $N_1$ of SRS resources included in the first SRS resource set and the number $N_2$ of SRS resources included in the second SRS resource set.

In some embodiments of the present disclosure, the second indication information includes first resource indication information and second resource indication information, and in a case where the target SRS resource set includes one SRS resource set, the first resource indication information is used to determine layer information of the uplink transmission and the target SRS resource corresponding to the uplink transmission in the target SRS resource set.

In some embodiments of the present disclosure, the number of bits occupied by the first resource indication information is determined according to at least one of:

    **a** transmission mode configured by the network device;

    **a** maximum number $L_{\max}$ of layers supported by the terminal device;

a number $N_1$ of SRS resources included in the first SRS resource set;
a number $N_2$ of SRS resources included in the second SRS resource set; or
a total number of SRS resource combinations corresponding to respective numbers of layers of the uplink transmission in the first SRS resource set.

In some embodiments of the present disclosure, in a case where the network device configures a non-codebook-based transmission mode, a number of bits occupied by the first resource indication information is determined according to a formula:

$$\max\left(\left\lceil \log_2\left(\sum_{k=1}^{\min\{L_{\max},N_{\min}\}} \binom{N_{\max}}{k}\right)\right\rceil, \left\lceil \log_2\left(\sum_{k=1}^{\min\{L_{\max},N_{\min}\}} \binom{N_1}{k}\right)\right\rceil\right),$$

where max represents taking a maximum value, min represents taking a minimum value, $\lceil \ \rceil$ represents rounding up, $N_{\min}$ represents a smaller value of the number $N_1$ of SRS resources included in the first SRS resource set and the number $N_2$ of SRS resources included in the second SRS resource set, $\sum_{k=1}^{\min\{L_{\max},N_{\min}\}} \binom{N_{\max}}{k}$ represents a total number of SRS resource combinations corresponding to respective numbers of layers of the uplink transmission in one of the first SRS resource set and the second SRS resource set having a larger number of SRS resources, and $\sum_{k=1}^{\min\{L_{\max},N_{\min}\}} \binom{N_1}{k}$ represents a total number of SRS resource combinations corresponding to respective numbers of layers of the uplink transmission in the first SRS resource set.

In some embodiments of the present disclosure, the second resource indication information is used to determine layer information of the uplink transmission and the target SRS resource corresponding to the uplink transmission in the second SRS resource set in a case where the target SRS resource set includes the first SRS resource set and the second SRS resource set.

In some embodiments of the present disclosure, in a case where the network device configures a non-codebook-based transmission mode, a number of bits occupied by the second resource indication information is determined according to a formula:

$$\left\lceil \log_2\left(\sum_{k=1}^{\min\{L_{\max},N_{\min}\}} \binom{N_2}{k}\right)\right\rceil,$$

where min represents taking a minimum value, $\lceil \ \rceil$ represents rounding up, and $\sum_{k=1}^{\min\{L_{\max},N_{\min}\}} \binom{N_2}{k}$ represents a total number of SRS resource combinations corresponding to respective numbers of layers of the uplink transmission in the second SRS resource set.

In some embodiments of the present disclosure, the second indication information includes first resource indication information and second resource indication information, the first resource indication information corresponding to the first SRS resource set, and the second resource indication information corresponding to the second SRS resource set. The first resource indication information is used to determine layer information of the uplink transmission and the target SRS resource corresponding to the uplink transmission in the first SRS resource set, and the second resource indication information is used to determine layer information of the uplink transmission and the target SRS resource corresponding to the uplink transmission in the second SRS resource set.

In some embodiments of the present disclosure, a number of bits occupied by the first resource indication information is determined according to at least one of:

a transmission mode configured by the network device;
a maximum number $L_{\max}$ of layers supported by the terminal device;
a number $N_1$ of SRS resources included in the first SRS resource set;

a number $N_2$ of SRS resources included in the second SRS resource set; or

a total number of SRS resource combinations corresponding to respective numbers of layers of the uplink transmission in the first SRS resource set.

In some embodiments of the present disclosure, in a case where the network device configures a non-codebook-based transmission mode, a number of bits occupied by the first resource indication information is determined according to a formula:

$$\max\left(\left\lceil \log_2\left(\sum_{k=1}^{\min\{L_{\max},N_1\}}\binom{N_1}{k}\right)\right\rceil, \left\lceil \log_2\left(\sum_{k=1}^{\min\{L_{\max},N_{\min}\}}\binom{N_1}{k}\right)\right\rceil\right),$$

or

$$\left\lceil \log_2\left(\sum_{k=1}^{\min\{L_{\max},N_{\min}\}}\binom{N_1}{k}\right)\right\rceil,$$

where max represents taking a maximum value, min represents taking a minimum value, $\lceil \ \rceil$ represents rounding up,

$$\sum_{k=1}^{\min\{L_{\max},N_1\}}\binom{N_1}{k}$$

represents a total number of SRS resource combinations corresponding to respective numbers of layers of the uplink transmission in the first SRS resource set in a case where the target SRS resource set includes only the first SRS resource set, $N_{\min}$ represents a smaller value of the number $N_1$ of SRS resources included in the first SRS resource set and the number $N_2$ of SRS resources included in the second SRS resource set, and $\displaystyle\sum_{k=1}^{\min\{L_{\max},N_{\min}\}}\binom{N_1}{k}$

represents a total number of SRS resource combinations corresponding to respective numbers of layers of the uplink transmission in the first SRS resource set in a case where the target SRS resource set includes the first SRS resource set and the second SRS resource set.

In some embodiments of the present disclosure, a number of bits occupied by the second resource indication information is determined according to at least one of:

**a** transmission mode configured by the network device;
**a** maximum number $L_{\max}$ of layers supported by the terminal device;
a number $N_2$ of SRS resources included in the second SRS resource set; or
**a** total number of SRS resource combinations corresponding to respective numbers of layers of the uplink transmission in the second SRS resource set.

In some embodiments of the present disclosure, in a case where the network device configures a non-codebook-based transmission mode, a number of bits occupied by the second resource indication information is determined according to a formula:

$$\max\left(\left\lceil \log_2\left(\sum_{k=1}^{\min\{L_{\max},N_2\}}\binom{N_2}{k}\right)\right\rceil, \left\lceil \log_2\left(\sum_{k=1}^{\min\{L_{\max},N_{\min}\}}\binom{N_2}{k}\right)\right\rceil\right),$$

or

$$\left\lceil \log_2\left(\sum_{k=1}^{\min\{L_{\max},N_{\min}\}}\binom{N_2}{k}\right)\right\rceil,$$

where $\ulcorner \urcorner$ represents rounding up, $\sum_{k=1}^{\min\{L_{\max}, N_2\}} \binom{N_2}{k}$ represents a total number of SRS resource combinations corresponding to respective numbers of layers of the uplink transmission in the second SRS resource set in a case where the target SRS resource set includes only the second SRS resource set, $N_{\min}$ represents a smaller value of the number $N_1$ of SRS resources included in the first SRS resource set and the number $N_2$ of SRS resources included in the second SRS resource set, and $\sum_{k=1}^{\min\{L_{\max}, N_{\min}\}} \binom{N_2}{k}$ represents a total number of SRS resource combinations corresponding to respective numbers of layers of the uplink transmission in the second SRS resource set in a case where the target SRS resource set includes the first SRS resource set and the second SRS resource set.

In some embodiments of the present disclosure, the first SRS resource set and the second SRS resource set are SRS resource sets for non-codebook transmission.

In some embodiments of the present disclosure, the first resource indication information is carried in a first SRS resource indicator field or a first Transmission Precoding Matrix Indicator (TPMI) field, and the second resource indication information is carried in a second SRS resource indicator field or a second TPMI indicator field.

In some embodiments of the present disclosure, the first SRS resource indicator field is a first SRS resource indicator field in the DCI, and the second SRS resource indicator field is a second SRS resource indicator field in the DCI.

In some embodiments of the present disclosure, the first indication information and the second indication information are carried in different fields in the DCI.

In some embodiments of the present disclosure, the first indication information is of at least 2 bits.

Alternatively, in some embodiments, the above-mentioned communication unit may be a communication interface or a transceiver, or an input/output interface of a communication chip or a system-on-chip. The above-mentioned processing unit may be one or more processors.

It should be understood that the network device 800 according to the embodiments of the present disclosure may correspond to the network device in the method embodiments of the present disclosure, and the above-mentioned and other operations and/or functions of each unit in the network device 800 are used for implementing the corresponding process performed by the network device in the method 400 as shown in FIG. 4, and description thereof will not be repeated here for the sake of brevity.

**FIG.** 7 is a schematic structural diagram of a communication device 600 according to an embodiment of the present disclosure. The communication device 600 as shown in FIG. 7 may include a processor 610. The processor 610 may be configured to invoke and execute a computer program from the memory, to implement the methods in the embodiments of the present disclosure.

**As** shown in FIG. 7, the communication device 600 may further include a memory 620. The processor 610 may be configured to invoke and execute a computer program from the memory 620, to implement the methods in the embodiments of the present disclosure.

The memory 620 may be an independent device separately from the processor 610, or may be integrated in the processor 610.

Alternatively, as shown in FIG. 7, the communication device 600 may further include a transceiver 630. The processor 610 may be configured to control the transceiver 630 to communicate with other devices, and in particular, may transmit information or data to other devices, or receive information or data transmitted by other devices.

**The** transceiver 630 may include a transmitter and a receiver. The transceiver 630 may further include antennas, and the number of antennas may be one or more.

It should also be understood that the communication device 600 may be the network device in the embodiments of the present disclosure, and the communication device 600 may implement the corresponding processes implemented by the network device in each method of the embodiment of the present disclosure, and details thereof will not be repeated here for the sake of brevity.

Alternatively, the communication device 600 in the embodiment of the present disclosure may be the mobile terminal/terminal device, and the communication device 600 may implement the corresponding processes implemented by the mobile terminal/terminal device in each method of the embodiment of the present disclosure, and details thereof will not be repeated here for the sake of brevity.

FIG. 8 is a schematic structural diagram of a chip according to an embodiment of the present disclosure. The chip 700 as shown in FIG. 8 includes a processor 710. The processor 710 may be configured to invoke and execute a computer program from the memory, to implement the methods in the embodiments of the present disclosure.

Alternatively, as shown in FIG. 8, the chip 700 may further include a memory 720. The processor 710 may be configured to invoke and execute a computer program from the memory 720, to implement the method in the embodiment of the present disclosure.

The memory 720 may be an independent device separately from the processor 710, or may be integrated in the processor 710.

Alternatively, the chip 700 may further include an input interface 730. The processor 710 may be configured to control the input interface 730 to communicate with other devices or chips, and in particular, may obtain information or data transmitted by other devices or chips.

Alternatively, the chip 700 may further include an output interface 740. The processor 710 may be configured to control the output interface 740 to communicate with other devices or chips, and in particular, may output information or data to other devices or chips.

Alternatively, the chip may be applied to the network device in the embodiments of the present disclosure, and the chip may implement the corresponding processes implemented by the network device in the various methods of the embodiments of the present disclosure, and details thereof will not be repeated here for the sake of brevity.

Alternatively, the chip may be applied to the mobile terminal/terminal device in the embodiments of the present disclosure, and the chip may implement the corresponding processes implemented by the mobile terminal/terminal device in the various methods of the embodiments of the present disclosure, and details thereof will not be repeated here for the sake of brevity.

It should also be understood that the chip in the embodiments of the present disclosure may also be called a system level chip, a system chip, a chip system, or a system-on-chip, etc.

FIG. 9 is a schematic block diagram of a communication system 900 provided by an embodiment of the present disclosure. As shown in FIG. 9, the communication system 900 includes a terminal device 910 and a network device 920.

The terminal device 910 may be configured to implement the corresponding functions implemented by the terminal device in the above methods, and the network device 920 may be configured to implement the corresponding functions implemented by the network device in the above methods.

It should be understood that the processor in the embodiments of the present disclosure may be an integrated circuit chip, which has signal processing capability. In the implementation process, each step of the above-mentioned method embodiments may be performed by an integrated logic circuit of hardware or instructions in software in a processor. The above-mentioned processor may be a general-purpose processor, a Digital Signal Processor (DSP), an Application Specific Integrated Circuit (ASIC), a Field Programmable Gate Array (FPGA), or other programmatic logic device, discrete gate or transistor logic device, discrete hardware component. Various methods, steps, and logic block diagrams disclosed in the embodiments of the present disclosure may be implemented or executed. The general-purpose processor may be a microprocessor, or the processor may be any conventional processor, or the like. The steps of the methods disclosed in the embodiments of the present disclosure may be directly embodied as being performed and completed by a hardware decoding processor, or by a combination of hardware and software modules in the decoding processor. The software modules may be located in a known storage medium in the related art, such as random access memory, flash memory, read-only memory, programmable read-only memory, electrically erasable programmable memory, or register. The storage medium may be located in the memory, and the processor may read information from the memory and perform the steps of the above methods in combination with its hardware.

It may be understood that the memory in the embodiments of the present disclosure may be a volatile memory or a non-volatile memory or both. The non-volatile memory may be a Read-Only Memory (ROM), a Programmable ROM (PROM), an Erasable PROM (EPROM), an Electrically EPROM (EEPROM), or a Flash. The volatile memory may be a Random Access Memory (RAM), which acts as an external cache. By way of illustration without any limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a synch link DRAM (SLDRAM), and a Direct Rambus RAM (DR RAM). It should be understood that the above-mentioned memory is intended to include, but not be limited to, these and any other suitable types of memory.

It may be understood that the above mentioned memory is illustrative without any limitation. For example, the memory in the embodiments of the present disclosure may be a Static RAM (SRAM), a Dynamic RAM (DRAM), a Synchronous DRAM (SDRAM), a Double Data Rate SDRAM (DDR SDRAM), an Enhanced SDRAM, ESDRAM), a synch link DRAM (SLDRAM), and a Direct Rambus RAM (DR RAM). That is, the memory in the embodiments of the present disclosure is intended to include, but not be limited to, these and any other suitable types of memory.

**An** embodiment of the present disclosure also provides a computer-readable storage medium, having a computer program stored thereon.

Alternatively, the computer-readable storage medium may be applied to the network device in the embodiments of the present disclosure, and the computer program causes the computer to perform the corresponding processes implemented by the network device in the methods of the embodiments of the present disclosure, and details thereof will not be repeated here for the sake of brevity.

Alternatively, the computer-readable storage medium may be applied to the mobile terminal/terminal device in the embodiments of the present disclosure, and the computer program causes the computer to perform the corresponding processes implemented by the mobile terminal/terminal device in the methods of the embodiments of the present disclosure, and details thereof will not be repeated here for the sake of brevity.

An embodiment of the present disclosure also provides a computer program product including computer program instructions.

Alternatively, the computer program product may be applied to the network device in the embodiment of the present disclosure, and the computer program instructions cause the computer to perform the corresponding processes implemented by the network device in each method of the embodiments of the present disclosure, and details thereof will not be repeated here for the sake of brevity.

Alternatively, the computer program product may be applied to the mobile terminal/terminal device in the embodiment of the present disclosure, and the computer program instructions cause the computer to perform the corresponding processes implemented by the mobile terminal/terminal device in each method of the embodiments of the present disclosure, and details thereof will not be repeated here for the sake of brevity.

An embodiment of the present disclosure also provides a computer program.

Alternatively, the computer program may be applied to the network device in the embodiment of the present disclosure. The computer program, when executed by the computer, causes the computer to perform the corresponding processes implemented by the network device in each method of the embodiments of the present disclosure, and details thereof will not be repeated here for the sake of brevity.

Alternatively, the computer program may be applied to the mobile terminal/terminal device in the embodiment of the present disclosure. The computer program, when executed by the computer, causes the computer to perform the corresponding processes implemented by the mobile terminal/terminal device in each method of the embodiments of the present disclosure, and details thereof will not be repeated here for the sake of brevity.

The skilled in the art may appreciate that the units and algorithm steps of the examples described in conjunction with the embodiments disclosed herein may be implemented by electronic hardware, or a combination of computer software and electronic hardware. Whether these functions are executed by hardware or software depends on the specific application and design constraints of the technical solution. Professionals and technicians may use different methods to implement the described functions for each specific application, but such implementation should not be regarded as going beyond the scope of the embodiments of the present disclosure.

The skilled in the art may also realize that, for convenience and brevity of description, the specific operating process of the above-described system, apparatus, and unit may refer to the corresponding process in the foregoing method embodiments, and details thereof will not be repeated here.

In the several embodiments provided in the present disclosure, it should be understood that the disclosed systems, devices and methods may be implemented in other ways. For example, the above described device embodiments are only illustrative. For example, the division of units in the above-described apparatus embodiments is only a logical function division, and there may be other division approaches in actual implementations. For example, multiple units or components may be combined or integrated to another system, or some units or components may be ignored, or not implemented. For another example, mutual coupling or direct coupling or communication connection shown or discussed above may be indirect coupling or communication connection of devices or units via some interfaces, and may be in electrical, mechanical or other forms.

The units described as separate components may or may not be physically separated, and the components shown as units may or may not be physical units, that is, they may be co-located, or may be distributed to multiple network units. Part or all of the units may be selected according to actual needs to achieve the purpose of the technical solutions of the embodiments.

In addition, each functional unit in each embodiment of the present disclosure may be integrated into one processing unit, or may physically exist separately. Or, two or more units may be integrated into one unit.

When the function is implemented in the form of a software functional unit and sold or used as a standalone product, it may be stored in a computer-readable storage medium. Based on this understanding, all or part of the technical solutions according to the present disclosure, or the part thereof that contributes to the prior art, may be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The above mentioned storage medium may include various mediums capable of storing program codes, such as a Universal Serial Bus flash drive, a mobile hard disk, an ROM, an RAM, a magnetic disk, or an optical disc.

**Claims**

1. An uplink transmission method, supporting dynamic switching between a Multi Transmission Receive Point, MTRP, and a Single Transmission Receive Point, STRP, comprising:

receiving (410), by a terminal device, Downlink Control Information, DCI, transmitted by a network device, the DCI being used to schedule the terminal device to transmit an uplink transmission in both an STRP scenario and an MTRP scenario, and the DCI comprising first indication information and second indication information,

wherein the first indication information indicates a target Sounding Reference Signal, SRS, resource set corresponding to the uplink transmission, the target SRS resource set comprising at least one of a first SRS resource set or a second SRS resource set, and the target SRS resource set being a SRS resource set corresponding to the uplink transmission when the uplink transmission is transmitted to the STRP or the MTRP; and

the second indication information is used to determine a target SRS resource corresponding to the uplink transmission in the target SRS resource set; wherein the second indication information comprises first resource indication information and second resource indication information;

wherein when the target SRS resource set comprises one SRS resource set, the first resource indication information is used to determine the target SRS resource in the target SRS resource set; when the target SRS resource set comprises the first SRS resource set and the second SRS resource set, the first resource indication information is used to determine the target SRS resource in the first SRS resource set, and the second resource indication information is used to determine the target SRS resource in the second SRS resource set.

2.  The method according to claim 1, wherein a number of SRS resource sets in the target SRS resource set indicates that a target Transmission Receive Point, TRP, of the uplink transmission is the STRP or the MTRP.

3.  The method according to claim 1, wherein a number of bits occupied by the first resource indication information is determined according to at least one of:

    a transmission mode configured by the network device; or

    $N_{max}$, where $N_{max}$ represents a larger value of a number $N_1$ of SRS resources comprised in the first SRS resource set and a number $N_2$ of SRS resources comprised in the second SRS resource set.

4.  The method according to claim 3, wherein when the network device configures a codebook-based transmission mode, a number of bits occupied by a first SRS Resource Indicator, SRI, field is determined according to

$$\lceil \log_2 N_{max} \rceil.$$

5.  The method according to claim 1 or 2, wherein the first resource indication information corresponding to the first SRS resource set, and the second resource indication information corresponding to the second SRS resource set, wherein the first resource indication information is used to determine the target SRS resource in the first SRS resource set, and the second resource indication information is used to determine the target SRS resource in the second SRS resource set.

6.  The method according to claim 5, wherein when the network device configures a codebook-based transmission mode, a number of bits occupied by a first SRI field is determined according to $\lceil \log_2 N_1 \rceil$, and a number of bits occupied by a second SRI field is determined according to $\lceil \log_2 N_2 \rceil$.

7.  The method according to claim 1 or 2, wherein when the target SRS resource set comprises one SRS resource set, the first resource indication information is used to determine layer information of the uplink transmission and the target SRS resource corresponding to the uplink transmission in the target SRS resource set.

8.  The method according to any one of claims 1-7, wherein the first resource indication information is carried in a first SRS resource indicator field or a first Transmission Precoding Matrix Indicator, TPMI, field, and the second resource indication information is carried in a second SRS resource indicator field or a second TPMI indicator field.

9.  An uplink transmission method, supporting dynamic switching between a Multi Transmission Receive Point, MTRP, and a Single Transmission Receive Point, STRP, comprising:

    transmitting (410), by a network device, Downlink Control Information, DCI, to a terminal device, the DCI being used to schedule the terminal device to transmit an uplink transmission in both an STRP scenario and an MTRP scenario, and the DCI comprising first indication information and second indication information,

wherein the first indication information indicates a target Sounding Reference Signal, SRS, resource set corresponding to the uplink transmission, the target SRS resource set comprising at least one of a first SRS resource set and a second SRS resource set, and the target SRS resource set being a SRS resource set corresponding to the uplink transmission when the uplink transmission is transmitted to the STRP or the MTRP; and

the second indication information is used to determine a target SRS resource corresponding to the uplink transmission in the target SRS resource set; wherein the second indication information comprises first resource indication information and second resource indication information;

wherein when the target SRS resource set comprises one SRS resource set, the first resource indication information is used to determine the target SRS resource in the target SRS resource set; when the target SRS resource set comprises the first SRS resource set and the second SRS resource set, the first resource indication information is used to determine the target SRS resource in the first SRS resource set, and the second resource indication information is used to determine the target SRS resource in the second SRS resource set.

10. The method according to claim 9, wherein a number of the target SRS resource set indicates that a target Transmission Receive Point, TRP, of the uplink transmission is an STRP or an MTRP.

11. A terminal device, comprising:

a processor, and
a memory having a computer program stored thereon, wherein the processor is configured to invoke and execute the computer program stored on the memory, to perform the method according to any one of claims 1 to 8.

12. A network device, comprising:

a processor, and
a memory having a computer program stored thereon,
wherein the processor is configured to invoke and execute the computer program stored on the memory, to perform the method according to claim 9 or 10.

**Patentansprüche**

1. Aufwärtsstrecken-Übertragungsverfahren, das eine dynamische Umschaltung zwischen einem Mehrfachübertragungs-Empfangspunkt, MTRP (Multi Transmission Receive Point), und einem Einzelübertragungs-Empfangspunkt, STRP (Single Transmission Receive Point), unterstützt, umfassend:

Empfangen (410), durch eine Endgerätvorrichtung, von Abwärtsstrecken-Steuerungsinformationen, DCI (Downlink Control Information), die durch eine Netzvorrichtung übertragen werden, wobei die DCI verwendet werden, um zu planen, dass die Endgerätvorrichtung eine Aufwärtsstreckenübertragung überträgt, sowohl in einem STRP-Szenario als auch in einem MTRP-Szenario, und wobei die DCI erste Anzeigeinformationen und zweite Anzeigeinformationen umfassen,

wobei die ersten Anzeigeinformationen einen Ziel-Sondierungsreferenzsignal, SRS (Sounding Reference Signal), -Ressourcensatz anzeigen, der der Aufwärtsstreckenübertragung entspricht, wobei der Ziel-SRS-Ressourcensatz mindestens eines von einem ersten SRS-Ressourcensatz oder einem zweiten SRS-Ressourcensatz umfasst und der Ziel-SRS-Ressourcensatz ein SRS-Ressourcensatz ist, der der Aufwärtsstreckenübertragung entspricht, wenn die Aufwärtsstreckenübertragung an den STRP oder den MTRP übertragen wird; und

wobei die zweiten Anzeigeinformationen zum Bestimmen einer Ziel-SRS-Ressource, die der Aufwärtsstreckenübertragung entspricht, im Ziel-SRS-Ressourcensatz verwendet werden; wobei die zweiten Anzeigeinformationen erste Ressourcenanzeigeinformationen und zweite Ressourcenanzeigeinformationen umfassen;

wobei, wenn der Ziel-SRS-Ressourcensatz einen SRS-Ressourcensatz umfasst, die ersten Ressourcenanzeigeinformationen zum Bestimmen der Ziel-SRS-Ressource im Ziel-SRS-Ressourcensatz verwendet werden;

wenn der Ziel-SRS-Ressourcensatz den ersten SRS-Ressourcensatz und den zweiten SRS-Ressourcensatz umfasst, die ersten Ressourcenanzeigeinformationen zum Bestimmen der Ziel-SRS-Ressource im ersten SRS-Ressourcensatz verwendet werden und die zweiten Ressourcenanzeigeinformationen zum Bestimmen der Ziel-SRS-Ressource im zweiten SRS-Ressourcensatz verwendet werden.

**2.** Verfahren gemäß Anspruch 1, wobei eine Anzahl von SRS-Ressourcensätzen im Ziel-SRS-Ressourcensatz anzeigt, dass ein Ziel-Übertragungsempfangspunkt, TRP (Transmission Receive Point), der Aufwärtsstreckenübertragung der STRP oder der MTRP ist.

**3.** Verfahren gemäß Anspruch 1, wobei eine Anzahl von Bits, die durch die Anzeigeinformationen der ersten Ressource belegt werden, gemäß mindestens einem der folgenden bestimmt wird:

einem Übertragungsmodus, der durch die Netzvorrichtung konfiguriert ist; oder
$N_{max}$, wobei $N_{max}$ für einen höheren Wert von einer Anzahl $N_1$ von SRS-Ressourcen, die im ersten SRS-Ressourcensatz enthalten sind, und einer Anzahl $N_2$ von SRS-Ressourcen, die im zweiten SRS-Ressourcensatz enthalten sind, steht.

**4.** Verfahren gemäß Anspruch 3, wobei, wenn die Netzvorrichtung einen codebuchbasierten Übertragungsmodus konfiguriert, eine Anzahl von Bits, die durch ein erstes SRS-Ressourcenanzeiger (Resource Indicator) -Feld belegt werden, gemäß $\left\lceil \log_2 N_{max} \right\rceil$ bestimmt wird.

**5.** Verfahren gemäß Anspruch 1 oder 2, wobei die ersten Ressourcenanzeigeinformationen dem ersten SRS-Ressourcensatz entsprechen und die zweiten Ressourcenanzeigeinformationen dem zweiten SRS-Ressourcensatz entsprechen, wobei die ersten Ressourcenanzeigeinformationen zum Bestimmen der Ziel-SRS-Ressource im ersten SRS-Ressourcensatz verwendet werden und die zweiten Ressourcenanzeigeinformationen zum Bestimmen der Ziel-SRS-Ressource im zweiten SRS-Ressourcensatz verwendet werden.

**6.** Verfahren gemäß Anspruch 5, wobei, wenn die Netzvorrichtung einen codebuchbasierten Übertragungsmodus konfiguriert, eine Anzahl von Bits, die durch ein erstes SRI-Feld belegt werden, gemäß $\left\lceil \log_2 N_1 \right\rceil$ bestimmt wird und eine Anzahl von Bits, die durch ein zweites SRI-Feld belegt werden, gemäß $\left\lceil \log_2 N_2 \right\rceil$ bestimmt wird.

**7.** Verfahren gemäß Anspruch 1 oder 2, wobei, wenn der Ziel-SRS-Ressourcensatz einen SRS-Ressourcensatz umfasst, die ersten Ressourcenanzeigeinformationen zum Bestimmen von Schichtinformationen der Aufwärtsstreckenübertragung und der Ziel-SRS-Ressource, die der Aufwärtsstreckenübertragung entspricht, im Ziel-SRS-Ressourcensatz verwendet werden.

**8.** Verfahren gemäß einem der Ansprüche 1-7, wobei die ersten Ressourcenanzeigeinformationen in einem ersten SRS-Ressourcenanzeigerfeld oder einem ersten Übertragungs-Vorcodierungsmatrixanzeiger, TPMI (Transmission Precoding Matrix Indicator), -Feld enthalten sind und die zweiten Ressourcenanzeigeinformationen in einem zweiten SRS-Ressourcenanzeigerfeld oder einem zweiten TPMI-Anzeigerfeld enthalten sind.

**9.** Aufwärtsstrecken-Übertragungsverfahren, das eine dynamische Umschaltung zwischen einem Mehrfachübertragungs-Empfangspunkt, MTRP (Multi Transmission Receive Point), und einem Einzelübertragungs-Empfangspunkt, STRP (Single Transmission Receive Point) unterstützt, umfassend:

Übertragen (410), durch eine Netzvorrichtung, von Abwärtsstrecken-Steuerungsinformationen, DCI (Downlink Control Information), an eine Endgerätvorrichtung, wobei die DCI verwendet werden, um zu planen, dass die Endgerätvorrichtung eine Aufwärtsstreckenübertragung überträgt, sowohl in einem STRP-Szenario als auch in einem MTRP-Szenario, und wobei die DCI erste Anzeigeinformationen und zweite Anzeigeinformationen umfassen,
wobei die ersten Anzeigeinformationen einen Ziel-Sondierungsreferenzsignal, SRS (Sounding Reference Signal), -Ressourcensatz anzeigen, der der Aufwärtsstreckenübertragung entspricht, wobei der Ziel-SRS-Ressourcensatz mindestens eines von einem ersten SRS-Ressourcensatz und einem zweiten SRS-Ressourcensatz umfasst und der Ziel-SRS-Ressourcensatz ein SRS-Ressourcensatz ist, der der Aufwärtsstreckenübertragung entspricht, wenn die Aufwärtsstreckenübertragung an den STRP oder den MTRP übertragen wird; und
wobei die zweiten Anzeigeinformationen zum Bestimmen einer Ziel-SRS-Ressource, die der Aufwärtsstreckenübertragung entspricht, im Ziel-SRS-Ressourcensatz verwendet werden; wobei die zweiten Anzeigeinformationen erste Ressourcenanzeigeinformationen und zweite Ressourcenanzeigeinformationen umfassen; wobei, wenn der Ziel-SRS-Ressourcensatz einen SRS-Ressourcensatz umfasst, die ersten Ressourcenanzeigeinformationen zum Bestimmen der Ziel-SRS-Ressource im Ziel-SRS-Ressourcensatz verwendet werden; wenn der Ziel-SRS-Ressourcensatz den ersten SRS-Ressourcensatz und den zweiten SRS-Ressourcensatz umfasst, die ersten Ressourcenanzeigeinformationen zum Bestimmen der Ziel-SRS-Ressource im ersten SRS-Ressourcensatz verwendet werden und die zweiten Ressourcenanzeigeinformationen zum Bestimmen der Ziel-SRS-Ressource im zweiten SRS-Ressourcensatz verwendet werden.

10. Verfahren gemäß Anspruch 9, wobei eine Anzahl von Ziel-SRS-Ressourcensätzen anzeigt, dass ein Ziel-Übertragungsempfangspunkt, TRP (Transmission Receive Point), der Aufwärtsstreckenübertragung ein STRP oder ein MTRP ist.

11. Endgerätvorrichtung, umfassend:

   einen Prozessor, und
   einen Speicher mit einem darin gespeicherten Computerprogramm, wobei der Prozessor dafür ausgelegt ist, das im Speicher gespeicherte Computerprogramm aufzurufen und auszuführen, um das Verfahren gemäß einem der Ansprüche 1 bis 8 durchzuführen.

12. Netzvorrichtung, umfassend:

   einen Prozessor, und
   einen Speicher mit einem darin gespeicherten Computerprogramm,
   wobei der Prozessor dafür ausgelegt ist, das im Speicher gespeicherte Computerprogramm aufzurufen und auszuführen, um das Verfahren gemäß Anspruch 9 oder 10 durchzuführen.

**Revendications**

1. Procédé de transmission en liaison montante, prenant en charge la commutation dynamique entre un point de réception à transmissions multiples, MTRP, et un point de réception à transmission unique, STRP, le procédé comprenant les étapes suivantes :

   recevoir (410), par un dispositif terminal, des informations de contrôle de liaison descendante, DCI, transmises par un dispositif de réseau, les DCI étant utilisées pour programmer le dispositif terminal afin qu'il transmette une transmission en liaison montante à la fois dans un scénario STRP et dans un scénario MTRP, et les DCI comprenant des premières informations d'indication et des deuxièmes informations d'indication, où les premières informations d'indication indiquent un ensemble de ressources de signal de référence de sondage cible, SRS, correspondant à la transmission en liaison montante, l'ensemble de ressources SRS cible comprenant au moins un premier ensemble de ressources SRS ou un deuxième ensemble de ressources SRS, et l'ensemble de ressources SRS cible étant un ensemble de ressources SRS correspondant à la transmission en liaison montante lorsque la transmission en liaison montante est transmise au STRP ou au MTRP ; et les deuxièmes informations d'indication sont utilisées pour déterminer une ressource SRS cible correspondant à la transmission en liaison montante dans l'ensemble de ressources SRS cible ; où les deuxièmes informations d'indication comprennent des premières informations d'indication de ressources et des deuxièmes informations d'indication de ressources ; où, lorsque l'ensemble de ressources SRS cible comprend un ensemble de ressources SRS, les premières informations d'indication de ressources sont utilisées pour déterminer la ressource SRS cible dans l'ensemble de ressources SRS cible ; lorsque l'ensemble de ressources SRS cible comprend le premier ensemble de ressources SRS et le deuxième ensemble de ressources SRS, les premières informations d'indication de ressources sont utilisées pour déterminer la ressource SRS cible dans le premier ensemble de ressources SRS, et les deuxièmes informations d'indication de ressources sont utilisées pour déterminer la ressource SRS cible dans le deuxième ensemble de ressources SRS.

2. Procédé selon la revendication 1, dans lequel un nombre d'ensembles de ressources SRS dans l'ensemble de ressources SRS cible indique qu'un point de réception de transmission cible, TRP, de la transmission en liaison montante est le STRP ou le MTRP.

3. Procédé selon la revendication 1, dans lequel un nombre de bits occupés par les premières informations d'indication de ressources est déterminé en fonction d'au moins l'un des éléments suivants :

un mode de transmission configuré par le dispositif de réseau ; ou

$N_{max}$, où $N_{max}$ représente la valeur la plus grande entre un nombre $N_1$ de ressources SRS comprises dans le premier ensemble de ressources SRS et un nombre $N_2$ de ressources SRS comprises dans le deuxième ensemble de ressources SRS.

4. Procédé selon la revendication 3, dans lequel, lorsque le dispositif de réseau configure un mode de transmission basé sur un livre de codes, un nombre de bits occupés par un premier champ d'indicateur de ressource SRS, SRI, est déterminé conformément à $\lceil \log_2 N_{max} \rceil$.

5. Procédé selon la revendication 1 ou 2, dans lequel les premières informations d'indication de ressources correspondent au premier ensemble de ressources SRS et les deuxièmes informations d'indication de ressources correspondent au deuxième ensemble de ressources SRS, où les premières informations d'indication de ressources sont utilisées pour déterminer la ressource SRS cible dans le premier ensemble de ressources SRS, et les deuxièmes informations d'indication de ressources sont utilisées pour déterminer la ressource SRS cible dans le deuxième ensemble de ressources SRS.

6. Procédé selon la revendication 5, dans lequel, lorsque le dispositif de réseau configure un mode de transmission basé sur un livre de codes, un nombre de bits occupés par un premier champ SRI est déterminé conformément à $\lceil \log_2 N_1 \rceil$, et un nombre de bits occupés par un deuxième champ SRI est déterminé conformément à $\lceil \log_2 N_2 \rceil$.

7. Procédé selon la revendication 1 ou 2, dans lequel, lorsque l'ensemble de ressources SRS cible comprend un ensemble de ressources SRS, les premières informations d'indication de ressources sont utilisées pour déterminer les informations de couche de la transmission montante et la ressource SRS cible correspondant à la transmission montante dans l'ensemble de ressources SRS cible.

8. Procédé selon l'une quelconque des revendications 1 à 7, dans lequel les premières informations d'indication de ressources sont transportées dans un premier champ d'indicateur de ressources SRS ou un premier champ d'indicateur de matrice de précodage de transmission, TPMI, et les deuxièmes informations d'indication de ressources sont transportées dans un deuxième champ d'indicateur de ressource SRS ou un deuxième champ d'indicateur TPMI.

9. Procédé de transmission en liaison montante, prenant en charge la commutation dynamique entre un point de réception à transmissions multiples, MTRP, et un point de réception à transmission unique, STRP, le procédé comprenant les étapes suivantes :

transmettre (410), par un dispositif de réseau, des informations de contrôle de liaison descendante, DCI, à un dispositif terminal, les DCI étant utilisées pour programmer le dispositif terminal afin qu'il transmette une transmission en liaison montante à la fois dans un scénario STRP et dans un scénario MTRP, et les DCI comprenant des premières informations d'indication et des deuxièmes informations d'indication,
où les premières informations d'indication indiquent un ensemble de ressources de signal de référence de sondage cible, SRS, correspondant à la transmission en liaison montante, l'ensemble de ressources SRS cible comprenant au moins un premier ensemble de ressources SRS et un deuxième ensemble de ressources SRS, et l'ensemble de ressources SRS cible étant un ensemble de ressources SRS correspondant à la transmission en liaison montante lorsque la transmission en liaison montante est transmise au STRP ou au MTRP ; et
les deuxièmes informations d'indication sont utilisées pour déterminer une ressource SRS cible correspondant à la transmission en liaison montante dans l'ensemble de ressources SRS cible ; où les deuxièmes informations d'indication comprennent des premières informations d'indication de ressources et des deuxièmes informations d'indication de ressources ;
où, lorsque l'ensemble de ressources SRS cible comprend un ensemble de ressources SRS, les premières informations d'indication de ressources sont utilisées pour déterminer la ressource SRS cible dans l'ensemble de ressources SRS cible ; lorsque l'ensemble de ressources SRS cible comprend le premier ensemble de ressources SRS et le deuxième ensemble de ressources SRS, les premières informations d'indication de ressources sont utilisées pour déterminer la ressource SRS cible dans le premier ensemble de ressources SRS, et les deuxièmes informations d'indication de ressources sont utilisées pour déterminer la ressource SRS cible dans le deuxième ensemble de ressources SRS.

**10.** Procédé selon la revendication 9, dans lequel un nombre de l'ensemble de ressources SRS cible indique qu'un point de réception de transmission cible, TRP, de la transmission en liaison montante est un STRP ou un MTRP.

**11.** Dispositif terminal, comprenant :

un processeur, et
une mémoire sur laquelle est stocké un programme informatique, où le processeur est configuré pour invoquer et exécuter le programme informatique stocké sur la mémoire, afin d'exécuter le procédé selon l'une quelconque des revendications 1 à 8.

**12.** Dispositif de réseau, comprenant :

un processeur, et
une mémoire sur laquelle est stocké un programme informatique,
où le processeur est configuré pour invoquer et exécuter le programme informatique stocké sur la mémoire, afin d'exécuter le procédé selon la revendication 9 ou 10.

<u>100</u>

110

120                    120

FIG. 1

| Terminal Device | | Network Device |
| --- | --- | --- |

S210, Measuring a downlink reference signal to obtain a candicate uplink precoding matrix

S220, Precoding at least one SRS with the candidate uplink precoding matrix

S230, At least one SRS

S240, Measuring channels of the at least one SRS to obtain channel measurement results, and selecting an SRS parameter from an SRS set according to the channel measurement results

S250, Transmitting DCI

S260, Performing modulation and coding on data of PUSCH according to an MCS level, and determining a precoding matrix and a number of transmission layers used for transmission of the data using SRI

S270, Performing precoding transmission on the PUSCH according to the precoding matrix and the number of transmission layers

S280, Estimating an uplink channel according to DMRS, and performing demodulation and decoding on the data of the PUSCH

FIG. 2

| Terminal Device | | Network Device |
|---|---|---|

S310, At least one SRS

S320, Measuring channels of the at least one SRS to obtain channel measurement results, and selecting an SRS parameter from an SRS set according to the channel measurement results

S330, Transmitting DCI

S340, Performing modulation and coding on data of PUSCH according to MCS; and determining a precoding matrix used for transmission of the data using SRI and TPMI, determining a number of transmission layers using the SRI, and selecting a precoder of PUSCH from a codebook using TPMI

S350, Performing precoding transmission on the PUSCH by the selected precoder according to the precoding matrix and the number of transmission layers

S360, Estimating an uplink channel according to DMRS, and performing demodulation and decoding on the data of the PUSCH

FIG. 3

400

| Terminal Device | | Network Device |
|---|---|---|

S410, DCI
(first indication information and second indication information)

S420 Determining a target SRS resource set corresponding to an uplink transmission according to the first indication information, and determining a target SRS resource in the target SRS resource set according to the second indication information

S430, Performing an uplink transmission using the target SRS resource

FIG. 4

Terminal Device
500

Communication Unit
510

FIG. 5

Network Device
800

Communication Unit
810

FIG. 6

Communication Device 600

Memory
620

Processor
610

Transceiver
630

FIG. 7

Chip 700

Input
Interface
730

Processor
710

Memory
720

Output
Interface
740

FIG. 8

Communication System 900

Terminal
Device

910

Network
Device

920

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMSUNG**. Enhancements on Multi-TRP for PDCCH, PUCCH and PUSCH. *3GPP DRAFT, R1-2103222*

- **ZTE**. Further details on Multi-beam and Multi-TRP operation. *3GPP DRAFT, R1-2102667*